# EUROPEAN PATENT SPECIFICATION

(11) **EP 3 932 790 B1**
(45) Date of publication and mention of the grant of the patent: **26.06.2024**
(21) Application number: 21182393.5
(22) Date of filing: 29.06.2021
(51) Int. Cl.: B62J 7/06, B62J 9/12, B62J 17/02

(54) **LEANING VEHICLE**
NEIGEFAHRZEUG
VÉHICULE À INCLINAISON

(30) Priority: 30.06.2020 TW 109122059
(43) Date of publication of application: 05.01.2022
(73) Proprietor: Yamaha Hatsudoki Kabushiki Kaisha, Iwata-shi, Shizuoka 438-8501 (JP)
(72) Inventor: WEI, Kai-Cheng, 320 TAOYUAN CITY (TW); WANG, Yao-Te, 320 TAOYUAN CITY (TW); LO, Shih-Kai, 320 TAOYUAN CITY (TW); LIU, Hung-Ming, 320 TAOYUAN CITY (TW)
(74) Representative: Grünecker Patent- und Rechtsanwälte PartG mbB

(56) References cited:
- FR-A1- 2 860 764
- JP-A- H11 245 866
- JP-B2- 3 403 831
- US-B2- 8 854 196

## Description

The present invention relates to a leaning vehicle according to the preamble of independent claim 1. Such leaning vehicle can be taken from the prior art document JP 3 403831 B2.

In an existing known leaning vehicle, a storage portion is provided below a saddle portion for a rider to sit or at a rear portion of the vehicle.

For example, in a leaning vehicle in TWI557009, a storage case is provided below a saddle portion for a rider to sit. The rider may store luggage in the storage case. In JP 2005-145203 A, in addition to a storage case (luggage case) provided below a saddle portion for a rider to sit, a rear storage case is mounted at a rear portion of a rear handlebar. In addition, storage bags are also usually mounted on the left and right sides of a rear wheel.

As described in TWI557009 and JP 2005-145203 A, in a case that the storage case is provided below the saddle portion for a rider to sit or a rear portion of the vehicle, because a storage portion may be used to store luggage, the convenience can be improved for a rider. In addition, in a case that the storage case is provided below the saddle portion or a storage box or a storage bag is provided on the rear portion of the vehicle to store luggage, stable luggage storage can be ensured.

However, when the rider intends to take out an article stored in the storage portion, the rider needs to dismount to open the saddle portion or needs to turn the body around in a riding state. Therefore, it is necessary to further improve the convenience for the rider.

To further improve the convenience for the rider, a storage portion may further be additionally disposed, and a storage portion is disposed around a front cover portion. In this case, in a riding state, an article stored in the storage portion can be taken out without turning the body around. Therefore, the convenience for a rider can be further improved.

For example, a storage portion may be disposed in a space inside the front cover portion of the leaning vehicle. However, a leaning vehicle similar to that in TWI557009 has a head pipe and a steering apparatus. The steering apparatus has a steering shaft rotatably inserted in the head pipe, an upper portion connected to the steering shaft, a handlebar member connected to an upper portion of the steering shaft and operated by a rider, a fork connected to a lower portion of the steering shaft, and a front wheel supported on the fork.

The leaning vehicle in TWI557009 has the front cover portion. The front cover portion covers a rotating member, that is, a steering apparatus, in the manner of overlapping the head pipe in a front view of the vehicle and overlapping the head pipe in a side view of the vehicle.

That is, in the leaning vehicle in TWI557009, the front cover portion is provided below the handlebar member and above the front wheel. Therefore, a space in which the storage portion may be provided is affected by the handlebar member and the front wheel and is somewhat restricted in the vehicle up-down direction. Further, because the rotating member is provided inside a front cover, to both avoid the interference with the rotating member and utilize the space inside the front cover portion to arrange the storage portion, the structure of a vehicle body of the front cover portion may become complex and the front portion of the vehicle body may be enlarged.

In another aspect, in the leaning vehicle in JP 2005-145203 A, a front storage basket is provided in front of the front cover portion. In this case, in JP 2005-145203 A, because luggage may be stably carried in the front storage basket without using a fastening rope member, so that the convenience can be improved for a rider and stable luggage storage can be ensured.

Further, in the leaning vehicle in JP 2005-145203 A, a headlamp is provided on a handlebar cover. In this way, even if the freedom of configuration of the front storage basket is restricted by the handlebar member and the front wheel in the vehicle up-down direction, the front cover portion can be formed compact, and therefore it can be ensured that the freedom of configuration of the front storage basket is relatively large.

However, the front cover portion is covered by the steering apparatus. Therefore, there is a limitation in compacting the front cover portion. Further, there are fears of making the front portion of the vehicle enlarged leaning due to the presence of the front storage basket. Further, a firm support structure is required to support the front storage basket. Therefore, there are fears that the structure around the head pipe may become complex and the front portion of the vehicle may be further enlarged. Therefore, for the leaning vehicle provided with a front storage basket similar to that in JP 2005-145203 A, a compact front portion of the vehicle cannot be fully ensured.

It is an objective of the present invention to provide a leaning vehicle that can ensure a compact front portion of the vehicle and stable luggage storage and further improve the convenience for a rider. According to the present invention said object is solved by a leaning vehicle having the features of independent claim 1. Preferred embodiments are laid down in the dependent claims.

According to the teaching it can be significantly changed the concept, and considered that instead of configuring a front storage basket in front of a front cover portion, luggage is directly carried on the front cover portion to improve convenience. With the front storage basket omitted, a compact front portion of a vehicle can be ensured.

However, a rider has a number of small objects such as portable luggage and a rain poncho. When a relatively small object such as a rain poncho is carried on the front cover portion, the convenience can be significantly improved for a rider. However, in a case that luggage is directly carried on the front cover portion, if the carried luggage is not relatively large, there are fears that the luggage storage stability may be reduced.

To ensure stable luggage storage, when luggage is directly carried on the front cover portion, it is considered that a luggage carrying surface for carrying the luggage is formed and a rope member is used to fasten the luggage on the front cover portion.

However, in a case that luggage is directly carried on the front cover portion, although the approach of fastening with a rope member is very effective to ensure stable luggage storage, the inventor finds that is needs more consideration.

In particular, generally, to reduce the impact of airflow that hits the front cover portion while driving, a front edge of the front cover portion is formed in the manner of extending forward and downward. Therefore, there are fears that the luggage may move forward and downward when the vehicle stops, moves at a low speed, or the like, if luggage is directly carried on the front cover portion. In particular, in a leaning vehicle in which a space intends to be arranged in front of the front cover portion as much as possible similar to that in JP 2005-145203 A, because the front edge of the front cover portion is formed extending forward and downward at a steep angle, the luggage that is directly carried on the front cover portion is more likely to move forward and downward.

In another aspect, during high-speed running, airflow that hits the luggage that is directly carried in the front cover portion while driving becomes stronger, and the luggage may move backward and upward.

Therefore, the specification deliberately designs the shape of a front cover and conceives as follows:
A leaning vehicle of the present teaching includes: a head pipe, a steering apparatus, a front cover portion, and a headlamp. The steering apparatus has a steering shaft, a handlebar member, a fork, and a front wheel. The steering shaft is rotatably inserted in the head pipe. The handlebar member is to be operated by a rider. The fork is connected to a lower portion of the steering shaft. The front wheel is supported on the fork. The front cover portion is provided below the handlebar member and above the front wheel. The headlamp is provided on a lower portion of the front cover portion. The front cover portion overlaps the head pipe in a front view of the vehicle and overlaps the head pipe in a side view of the vehicle. A front edge of the front cover portion extends downward and forward in a side view of the vehicle. The front cover portion includes: a front cover luggage carrying surface portion, a front cover rear stop portion, a front cover left stop portion, and a front cover right stop portion. The front cover luggage carrying surface portion is formed above the headlamp, and luggage can be directly carried on the surface of the front cover portion. The front cover rear stop portion is formed in the manner of extending upward from a rear portion of the front cover luggage carrying surface portion. The front cover left stop portion is formed in the manner of extending upward from a left side portion of the front cover luggage carrying surface portion. The front cover right stop portion is formed in the manner of extending upward from a right side portion of the front cover luggage carrying surface portion. The leaning vehicle further includes a rope member mounting portion. The luggage directly carried on the front cover luggage carrying surface portion may be fastened on the front cover luggage carrying surface portion by a rope member mounted on the rope member mounting portion. In a cross-section obtained by cutting the front cover luggage carrying surface portion and the front cover rear stop portion by a vertical plane extending in the vehicle front-back direction, an angle of the front cover luggage carrying surface portion relative to the horizontal line is less than an angle of the front cover rear stop portion relative to the horizontal line. In a cross-section obtained by cutting the front cover luggage carrying surface portion and the front cover left stop portion by a vertical plane extending in the vehicle left-right direction, an angle of the front cover left stop portion relative to the horizontal line is greater than the angle of the front cover luggage carrying surface portion relative to the horizontal line. In a cross-section obtained by cutting the front cover luggage carrying surface portion and the front cover right stop portion by the vertical plane extending in the vehicle left-right direction, an angle of the front cover right stop portion relative to the horizontal line is greater than the angle of the front cover luggage carrying surface portion relative to the horizontal line.

In particular, in the leaning vehicle of the present teaching, the front cover portion has the front cover luggage carrying surface portion where the luggage can be directly carried on the surface of the front cover portion. In this way, a large front storage basket does not further need to be disposed to store the luggage, and therefore a compact front portion of the vehicle can be ensured. Further, even if the body is turned around in a riding state, since a stored object carried on the front cover luggage carrying surface portion can be easily reached and acquired, the convenience for a rider can be further improved.

Further, the luggage that is directly carried on the front cover luggage carrying surface portion may be fastened on the front cover luggage carrying surface portion by a rope member mounted on the rope member mounting portion. In this way, stable luggage storage can be ensured.

Further, in the leaning vehicle of the present teaching, the front cover portion includes: the front cover rear stop portion formed in the manner of extending upward from the rear portion of the front cover luggage carrying surface portion.

Further, in the cross-section obtained by cutting the front cover luggage carrying surface portion and the front cover rear stop portion by the vertical plane extending in the vehicle front-back direction, the angle of the front cover luggage carrying surface portion relative to the horizontal line is less the angle of the front cover rear stop portion relative to the horizontal line.

That is, compared with the front cover rear stop portion, the front cover luggage carrying surface portion is formed at an angle closer to a straight angle. Therefore, it is difficult for the luggage that is directly carried on the front cover luggage carrying surface portion to move toward the front and bottom when the vehicle stops, moves at a low speed, or the like.

Further, the angle of the front cover luggage carrying surface portion relative to the horizontal line is set to be greater than the angle of the front cover luggage carrying surface portion relative to the horizontal line. When the vehicle moves at a high speed or the like, the front cover rear stop portion may be used to inhibit the luggage that is directly carried on the front cover luggage carrying surface portion from deviating toward the rear and top.

That is, with the angle design of the front cover luggage carrying surface portion and the front cover rear stop portion, stable luggage storage can be further ensured.

In another aspect, in the leaning vehicle of the present teaching, the headlamp is provided on the lower portion of the front cover portion, and the front cover luggage carrying surface portion is formed above the headlamp.

In this way, the front cover rear stop portion formed in the manner of extending upward from the rear portion of the front cover luggage carrying surface portion may be formed relatively short in the up-down direction. Therefore, airflow that hits the front cover rear stop portion while driving can be reduced.

Further, the headlamp is configured without using a handlebar cover, and the handlebar cover may be formed relatively small or the handlebar cover may be omitted. Therefore, a compact front portion of the vehicle can be further ensured.

In particular, when the front cover luggage carrying surface portion and the front cover rear stop portion are formed at different angles, the front cover rear stop portion is formed at an angle closer than the front cover luggage carrying surface portion to a right angle. Therefore, compared with a case that the front cover rear stop portion is formed at an angle closer to a straight angle, the front cover rear stop portion has a larger height in the up-down direction. Further, the more that the front cover luggage carrying surface portion is formed at the lower portion of the front cover portion, the front cover rear stop portion has a larger height in the up-down direction. If the front cover rear stop portion has a larger height in the up-down direction, there are fears that the airflow hitting the front cover rear stop portion while driving may be stronger.

Therefore, in the present teaching, the headlamp is provided on the lower portion of the front cover portion, to enable the front cover rear stop portion to be formed relatively short in the up-down direction, thereby reducing the airflow that hits the front cover rear stop portion while driving.

Further, in a case that a luggage carrying surface portion of the front cover portion is formed above the headlamp, the front cover luggage carrying surface portion is formed at a higher portion of the front cover portion, and therefore may be formed longer in the vehicle front-back direction. In this way, stable luggage storage can be further ensured.

Further, in the leaning vehicle of the present teaching, the front cover portion has the front cover left stop portion and the front cover right stop portion that are respectively formed in the manner of extending upward from the left side portion and the right side portion of the front cover luggage carrying surface portion. Further, in a cross-section obtained by cutting the front cover luggage carrying surface portion, the front cover left stop portion, and the front cover right stop portion by the vertical plane extending in the vehicle left-right direction, angles of the front cover left stop portion and the front cover right stop portion relative to the horizontal line are both greater than the angle of the front cover luggage carrying surface portion relative to the horizontal line.

In this way, the width of the front cover luggage carrying surface portion in the vehicle left-right direction can be ensured, and the deviation of the luggage when the leaning vehicle transversely leans in the width direction of the vehicle is inhibited. Therefore, stable luggage storage can be further ensured.

In particular, in a case that the leaning vehicle leans toward the left of the vehicle, the luggage that is directly carried on the front cover luggage carrying surface portion may move toward the left of the vehicle. Further, in a case that the leaning vehicle leans toward the right of the vehicle, the luggage that is directly carried on the front cover luggage carrying surface portion may move toward the right of the vehicle.

Therefore, in the leaning vehicle of the present teaching, the front cover left stop portion is formed at an angle closer than the front cover luggage carrying surface portion to a right angle. Therefore, in a case that the leaning vehicle leans toward the left of the vehicle, the front cover left stop portion may be used to inhibit the luggage that is directly carried on the front cover luggage carrying surface portion from moving toward the left and top of the vehicle.

Further, the front cover right stop portion is formed at an angle closer than the front cover luggage carrying surface portion to a right angle. Therefore, in a case that the leaning vehicle leans toward the right of the vehicle, the front cover right stop portion may be used to inhibit the luggage that is directly carried on the front cover luggage carrying surface portion from moving toward the right and top of the vehicle.

In this way, the leaning vehicle may be provided, so that a compact front portion of the vehicle can be maintained, a rope member is used for fastening, and the shape of a front cover is deliberately designed. In this way, regardless of the running status of the vehicle, luggage can be stably and directly carried on the front cover portion, thereby improving convenience.

The front cover portion further includes: a front cover front stop portion formed in the manner of extending upward from a front portion of the front cover luggage carrying surface portion.

As discussed above, to reduce the impact of the airflow that hits the front cover portion while driving, the front edge of the front cover portion is formed in the manner of extending forward and downward. In a case that the front cover front stop portion formed in the manner of extending upward from the front portion of the front cover luggage carrying surface portion is further disposed, by the front cover front stop portion, the luggage can be further inhibited from moving forward and downward when the vehicle stops, moves at a low speed, or the like. Therefore, stable luggage storage can be further ensured.

Preferably, the rope member mounting portion includes: a left rope member mounting portion and a right rope member mounting portion. The left rope member mounting portion is formed by a part of the front cover portion, and is arranged further leftward than the front cover left stop portion in a front view of the vehicle. The right rope member mounting portion is formed by a part of the front cover portion, and is arranged further rightward than the front cover right stop portion in a front view of the vehicle.

In a case that the rope member mounting portion is formed by a part of the front cover portion, a space for configuring the rope member mounting portion separately from the front cover portion can be saved. Therefore, a compact front portion of the vehicle can be further ensured.

Further, the left rope member mounting portion is arranged further leftward than the front cover left stop portion, and the right rope member mounting portion is arranged further rightward than the front cover right stop portion, the rope member may span the front cover luggage carrying surface portion in the vehicle left-right direction, and the luggage is fastened on the front cover luggage carrying surface portion from above. Therefore, stable luggage storage can be further ensured.

The front cover luggage carrying surface portion includes a recessed portion that is recessed downward. The rope member mounting portion is formed by a part of the front cover portion, and is provided below the entirety of the front cover front stop portion in a front view of the vehicle, and provided in front of the recessed portion to the front in a side view of the vehicle.

In this case, the recessed portion that is recessed downward is formed in the front cover luggage carrying surface portion. Inside a vehicle body at the front cover portion, a space below the recessed portion is narrower than a space below a portion other than the recessed portion to the bottom. Therefore, a sound collection space of a horn can be formed. Further, an opening for sound to travel out of the vehicle body is provided at a position in front of the sound collection space of the vehicle. The rope member mounting portion is formed at a portion where the opening is formed in the front cover portion. A space for configuring the rope member mounting portion separately from the front cover portion can be saved. Therefore, a compact front portion of the vehicle can be further ensured.

Preferably, the rope member mounting portion is formed by a part of the front cover portion, and is formed in the manner of protruding upward from the front cover rear stop portion.

In a case that the rope member mounting portion is formed by a part of the front cover portion, a space for configuring the rope member mounting portion separately from the front cover portion can be saved. Therefore, a compact front portion of the vehicle can be further ensured.

Further, the rope member mounting portion is disposed on the front cover rear stop portion formed in the manner of protruding upward from the front cover rear stop portion. A rope member mounted on the rope member mounting portion may provide the luggage with fastening forces backward and upward. Therefore, the luggage can be further inhibited from moving forward and downward when the vehicle stops, moves at a low speed, or the like. Therefore, stable luggage storage can be further ensured.

In a not claimed embodiment, the rope member mounting portion is formed separately from the front cover portion, and is at least disposed on the front cover rear stop portion, the front cover left stop portion, or the front cover right stop portion.

The rope member mounting portion is formed separately from the front cover portion, and is at least disposed on the front cover rear stop portion, the front cover left stop portion, or the front cover right stop portion, so that the arrangement of the rope member mounting portion can be simplified. In this way, storage stability can be ensured by using a simple method.

In a not claimed embodiment, the rope member mounting portion is formed separately from the front cover portion, forms a loop in a top view of the vehicle, and is disposed above the front cover left stop portion, the front cover rear stop portion, the front cover right stop portion, and the front cover front stop portion.

In this case, the rope member mounting portion forms a loop, and is disposed above the front cover left stop portion, the front cover rear stop portion, the front cover right stop portion, and the front cover front stop portion, so that a relatively large rope member mounting portion may be formed, and there are more positions where rope members can be mounted. Therefore, because the degree of freedom of mounting a rope member can be increased in accordance with the shape or weight of luggage, the strength of fastening the luggage on the front cover portion by using a rope member can be increased. In this way, stable luggage storage can be further ensured.

Preferably, in a top view of the vehicle, at least a part of the rope member mounting portion is configured in the manner of overlapping the front cover luggage carrying surface portion.

At least a part of the rope member mounting portion is configured in the manner of overlapping the front cover luggage carrying surface portion in a top view of the vehicle, so that a position where a rope member can be mounted can be close to the luggage. In this way, the strength of fastening the luggage on the front cover portion by a rope member can be increased, so that stable luggage storage is further ensured.

Preferably, a distance between a front end and a rear end of the front cover front stop portion is less than a distance between a front end and a rear end of the front cover rear stop portion.

In this case, the distance between the front end and the rear end of the front cover front stop portion is set to be less than the distance between the front end and the rear end of the front cover rear stop portion. The length of the front cover front stop portion in the vehicle front-back direction may be formed relatively short. In this way, the front cover luggage carrying surface portion may be formed relatively long in the vehicle front-back direction. In this way, stable luggage storage can be further ensured.

Preferably, the maximum height of the front cover left stop portion in the up-down direction is less than the minimum height of the front cover rear stop portion in the up-down direction, and the maximum height of the front cover right stop portion in the up-down direction is less than the minimum height of the front cover rear stop portion in the up-down direction.

In this case, the heights of the front cover left stop portion and the front cover right stop portion are formed to be less than that of the front cover rear stop portion, so that the front cover left stop portion and the front cover right stop portion can be compact. In this way, because the front cover left stop portion and the front cover right stop portion may be formed relatively low, even if relatively large luggage is placed on the front cover luggage carrying surface portion, the front cover left stop portion and the front cover right stop portion may be used to fasten only the bottom portion of the luggage, to inhibit the luggage from moving in the left-right direction, and a luggage storage space in the left-right direction closer than the front cover left stop portion and the front cover right stop portion to the top is provided to be relatively large.

Further, because a stored object placed on the front cover luggage carrying surface portion can be easily reached and acquired, so that stable luggage storage is ensured and the convenience is further improved for a rider.

Preferably, the maximum height of the front cover left stop portion in the up-down direction is less than the minimum height of the front cover rear stop portion in the up-down direction. The maximum height of the front cover right stop portion in the up-down direction is less than the minimum height of the front cover rear stop portion in the up-down direction. The minimum height of the front cover left stop portion in the up-down direction is greater than the maximum height of a front cover front stop portion in the up-down direction. The minimum height of the front cover right stop portion in the up-down direction is greater than the maximum height of the front cover front stop portion in the up-down direction.

In this case, the heights of the front cover front stop portion, the front cover left stop portion, and the front cover right stop portion are set to be less than that of the front cover rear stop portion, so that the front cover front stop portion, the front cover left stop portion, and the front cover right stop portion may be compact.

In this way, because the front cover front stop portion, the front cover left stop portion, and the front cover right stop portion may be formed relatively low, even if relatively large luggage is placed on the front cover luggage carrying surface portion, the front cover front stop portion, the front cover left stop portion, and the front cover right stop portion may be used to fasten only the bottom portion of the luggage, to inhibit the luggage from moving forward and moving in the left-right direction, and luggage storage spaces in the vehicle front-back direction and the left-right direction above the front cover front stop portion, the front cover left stop portion, and the front cover right stop portion are provided to be relatively large.

Further, because a stored object placed on the front cover luggage carrying surface portion can be easily reached and acquired, stable luggage storage can be ensured, and the convenience can be further improved for a rider.

Preferably, an anti-slip member is disposed on the front cover luggage carrying surface portion.

In a case that luggage is stored in the manner of being directly placed on the front cover luggage carrying surface portion, the anti-slip member disposed on the front cover luggage carrying surface portion may be used to further inhibit the luggage from moving in the vehicle vehicle front-back direction or the vehicle left-right direction. In this way, stable luggage storage can be further ensured

Preferably, the anti-slip member has a rib form.

In a case that luggage is stored in the manner of being directly placed on the front cover luggage carrying surface portion, the anti-slip member disposed on the front cover luggage carrying surface portion may be used to further inhibit the luggage from moving in the vehicle front-back direction or the vehicle left-right direction. Further, in a case that the anti-slip member is disposed in a rib form, a space for arranging the anti-slip member can be saved. Therefore, a small front portion of the vehicle can be further ensured.

Further, a contact area with the luggage may become larger, so that the efficacy of inhibiting movement can be improved. In this way, stable luggage storage can be further ensured.

Preferably, the front cover luggage carrying surface portion includes a recessed portion that is recessed downward. The recessed portion includes: a bottom surface portion, a left surface portion formed in the manner of extending upward from a left side portion of the bottom surface portion in the vehicle left-right direction, and a right surface portion formed in the manner of extending upward from a right side portion of the bottom surface portion in the vehicle left-right direction. The anti-slip member is formed by the left surface portion and the right surface portion.

In a case that luggage is stored in the manner of being directly placed on the front cover luggage carrying surface portion, the anti-slip member disposed on the front cover luggage carrying surface portion may be used to further inhibit the luggage from moving in the vehicle front-back direction or the vehicle left-right direction. In this way, stable luggage storage can be further ensured.

In another aspect, the recessed portion that is recessed downward is formed in the front cover luggage carrying surface portion. Inside the vehicle body at the front cover portion, a space below the recessed portion to the bottom is narrower than a space below a portion other than the recessed portion to the bottom. Therefore, the sound collection space of the horn can be formed. A portion for forming the recessed portion in the front cover portion is used to form the anti-slip member, so that a space for arranging the anti-slip member separately from the front cover portion can be saved. Therefore, a compact front portion of a vehicle can be further ensured.

### Brief description of the drawings

FIG. 1 is a vehicle left side view of a vehicle 1 according to a first implementation aspect of the present teaching.
FIG. 2 is a vehicle right side view of the vehicle 1 according to the first implementation aspect of the present teaching.
FIG. 3 is a vehicle front view of the vehicle 1 according to the first implementation aspect of the present teaching.
FIG. 4 is a vehicle top view of the vehicle 1 according to the first implementation aspect of the present teaching.
FIG. 5 is a sectional view of a partial cross-section obtained by observing a line D-D in FIG. 3 from the right side.
FIG. 6(A) is a sectional view of a cross-section obtained by observing a line A-A in FIG. 1 from the front.
FIG. 6(B) is a sectional view of a cross-section obtained by observing a line B-B in FIG. 1 from the front.
FIG. 6(C) is a sectional view of a cross-section obtained by observing a line C-C in FIG. 1 from the front.
FIG. 6(D) is a partial exploded view of a front cover portion 12.
FIG. 7 is an enlarged view of a vehicle front view of the vehicle 1 according to a second implementation aspect of the present teaching.
FIG. 8 is a vehicle top view of the vehicle 1 according to the second implementation aspect of the present teaching.
FIG. 9 is a vehicle left side view of the vehicle 1 according to a third implementation aspect of the present teaching.
FIG. 10 is a vehicle front view of the vehicle 1 according to the third implementation aspect of the present teaching.
FIG. 11 is a vehicle top view of the vehicle 1 according to the third implementation aspect of the present teaching.

### Detailed Description

The implementation aspects of the present teaching are described below with reference to the accompanying drawings.

### [First implementation aspect]

A vehicle 1 applicable to this implementation aspect is a leaning vehicle that turns in a leaning posture. That is, the vehicle 1 leans left with turning of the leaning vehicle leftward and leans right. The tilting leaning vehicle includes, for example, a two-wheeled motorcycle, a three-wheeled motorcycle, or the like. A two-wheeled motorcycle is used as an example to describe the vehicle 1 applicable to this implementation aspect.

Further, in the following description, the front, rear, left, and right respectively represent the front, rear, left, and right observed from a rider sitting on the vehicle 1. The front-back direction is the same as the vehicle front-back direction, the left-right direction is the same as the vehicle left-right direction, and the up-down direction is the same as the vehicle up-down direction. Further, in the drawings, the direction of an arrow F and the direction of an arrow B represent the forward and backward, the direction of an arrow U and the direction of an arrow D represents upward and downward, and the direction of an arrow L and the direction of an arrow R represent leftward and rightward.

### [Overall vehicle body]

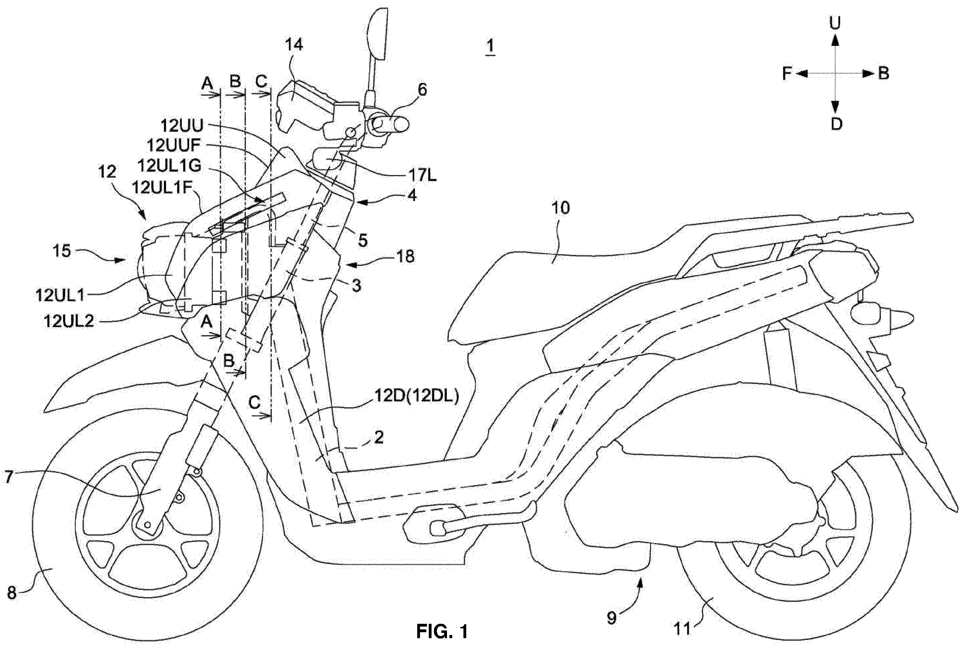

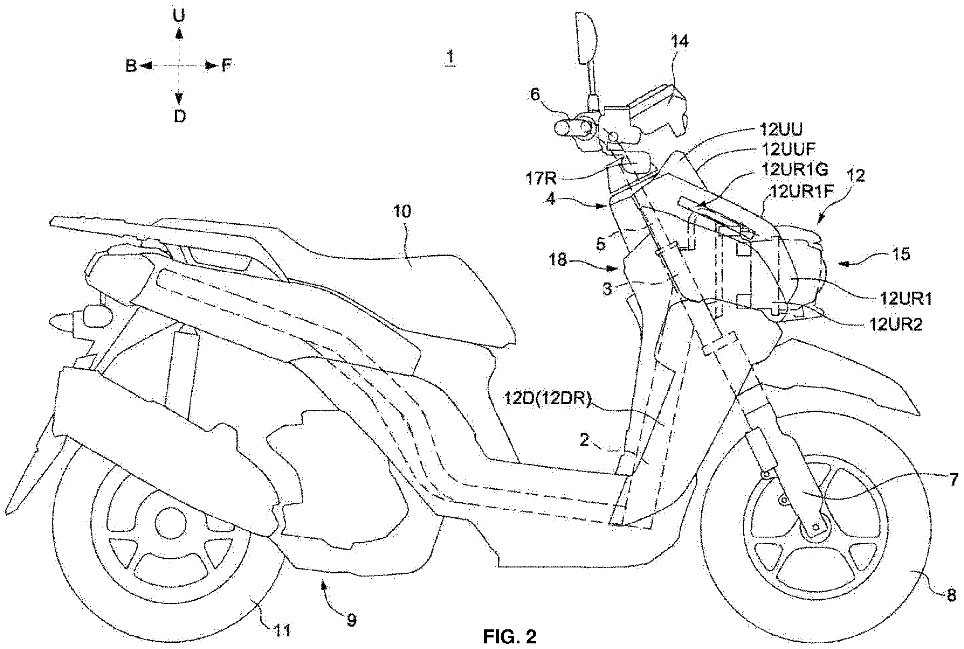

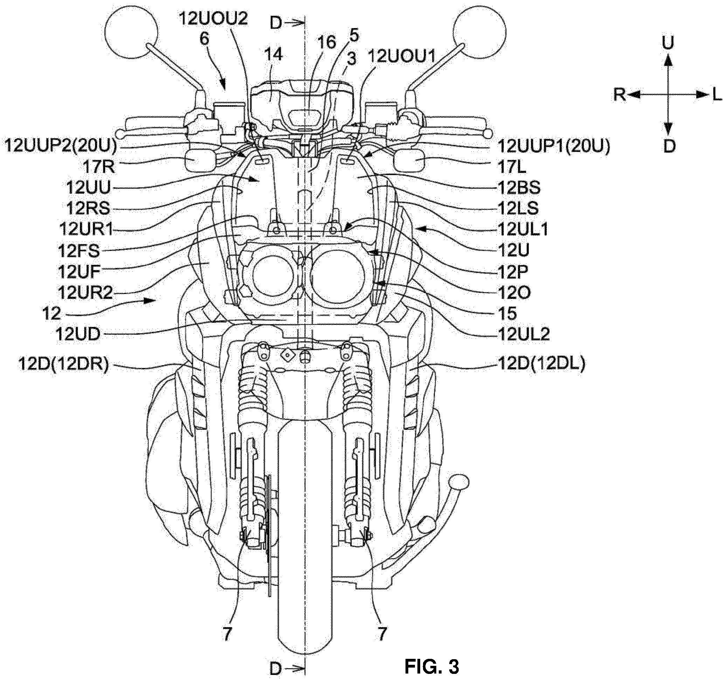

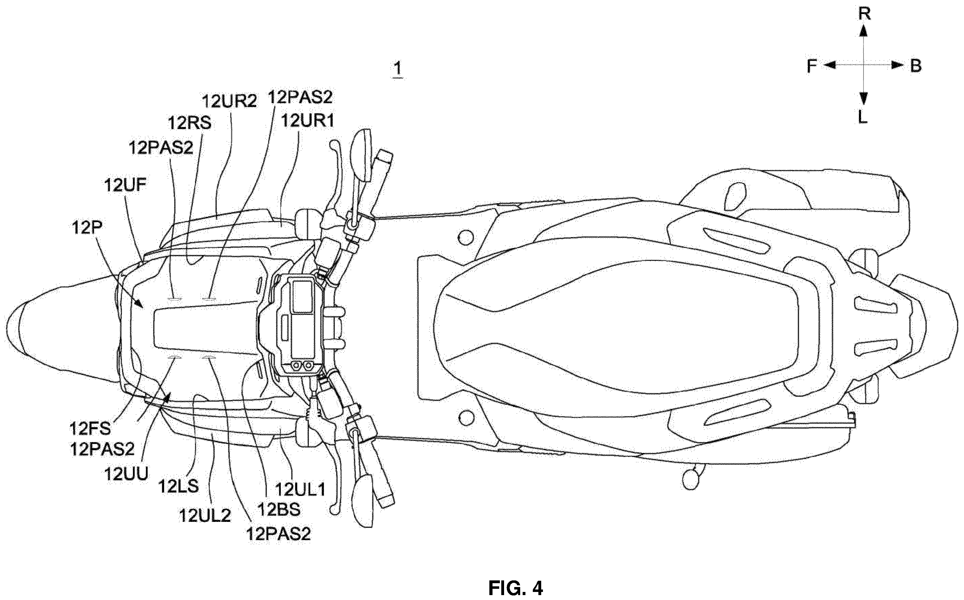

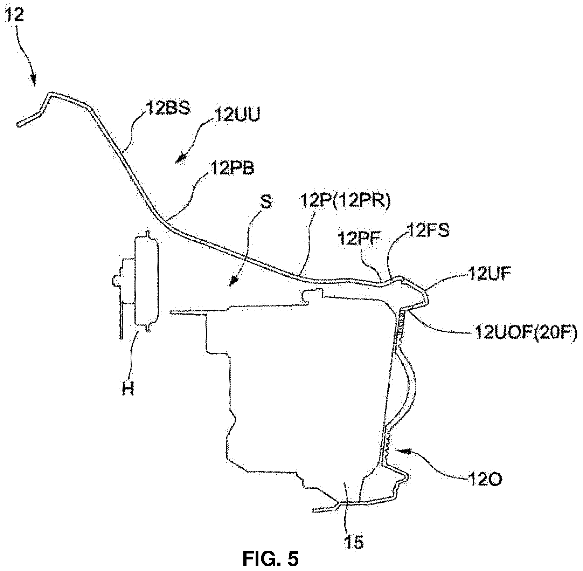

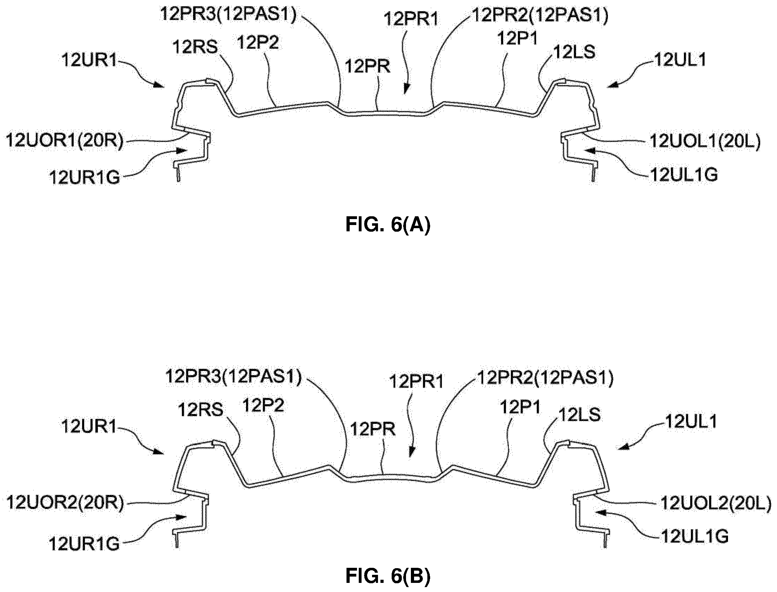

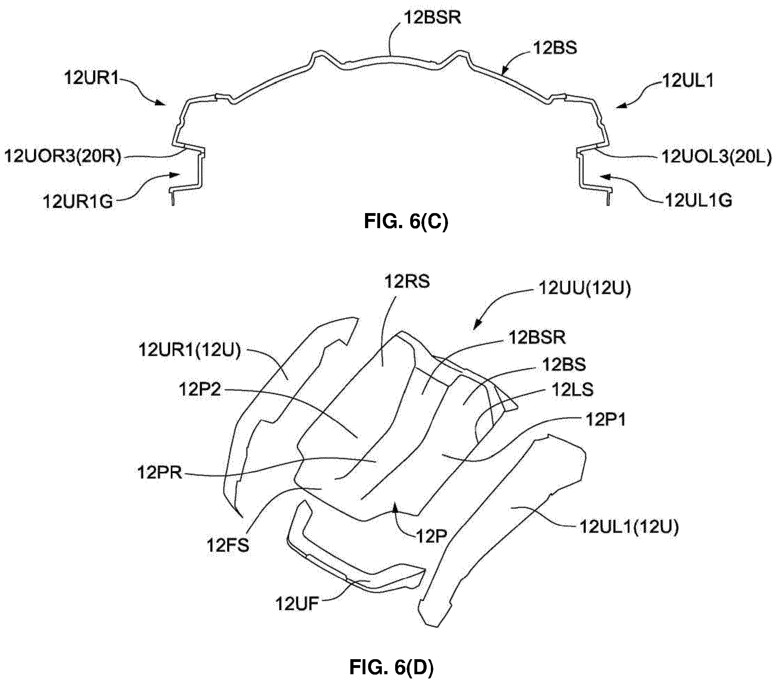

First, the overall structure of the vehicle 1 in this implementation aspect is briefly described with reference to FIG. 1 to FIG. 4. FIG. 1 is a vehicle left side view of the vehicle 1 according to the first implementation aspect. FIG. 2 is a vehicle right side view of the vehicle 1 according to the first implementation aspect. FIG. 3 is a vehicle front view of the vehicle 1 according to the first implementation aspect. FIG. 4 is a vehicle top view of the vehicle 1 according to the first implementation aspect. FIG. 5 is a sectional view of a partial cross-section along a line D-D in FIG. 3 observed from the right side. FIG. 6(A) is a sectional view of a cross-section along a line A-A in FIG. 1 observed from the front side. FIG. 6(B) is a sectional view of a cross-section along a line B-B in FIG. 1 observed from the front. FIG. 6(C) is a sectional view of a cross-section along a line C-C in FIG. 1 observed from the front. FIG. 6(D) is a partial exploded view of a front cover portion 12. Moreover, in FIG. 1 to FIG. 3, dotted lines represent the structure inside the vehicle of a part of a vehicle frame 2, a fork 7, a head pipe 3, and the like.

As shown in FIG. 1 to FIG. 3, a scooter motorcycle 1 has the vehicle frame 2 of bottom frame type. A front end portion of the vehicle frame 2 is provided with the head pipe 3. The head pipe 3 is provided on a central portion of the vehicle in the left-right direction. The head pipe 3 extends obliquely downward toward the front. The vehicle 1 has a steering apparatus 4. The steering apparatus 4 has a steering shaft 5, a handlebar member 6, a fork 7, and a front wheel 8. The steering shaft 5 is rotatably inserted in the head pipe 3. That is, the steering shaft 5 is rotatably supported on the head pipe 3. A pair of a left fork 7 and a right fork 7 are disposed on a lower portion of the steering shaft 5. That is, the fork 7 is rotatably supported on the head pipe 3. The fork 7 is connected to the lower portion of the steering shaft 5.

Further, the pair of the left fork 7 and the right fork 7 are provided on the left and right of the front wheel 8. The steering shaft 5 extends obliquely downward toward the front. The front end portion of the vehicle frame 2 can be supported on the fork 7 in a transversely rotatable manner. In a side view of the vehicle frame 2, a power unit 9 of a unit swing type is supported at the central portion of the vehicle frame 2. A saddle portion 10 is provided above the power unit 9. The pair of the left fork 7 and the right fork 7 extend obliquely downward to the front, and the front wheel 8 is rotatably supported at a lower end. That is, the front wheel 8 is supported on the fork 7. An upper end of the fork 7 is mounted on the steering shaft 5. The handlebar member 6 to be operated by a rider is connected to an upper portion of the steering shaft 5. A rear wheel 11 is provided on a rear end portion of the power unit 9. The rear wheel 11 is rotatably supported on the rear end portion of the power unit 9, and is driven by a driving force of the power unit 9.

Further, the vehicle 1 includes the front cover portion 12 provided in front of the head pipe 3. The front cover portion 12 is provided below the handlebar member 6. The front cover portion 12 is provided above the front wheel 8.

As shown in FIG. 1 and FIG. 2, a position lamp cover 14 is mounted on the handlebar member 6 through a support portion.

Further, the vehicle 1 includes a headlamp 15. The headlamp 15 is provided in front of the head pipe 3. The headlamp 15 is provided on a lower portion of the front cover portion 12. The headlamp 15 is formed by double headlamps disposed in parallel in the left-right direction.

As shown in FIG. 3, in a front view of the vehicle, a position lamp 16 is provided on the position lamp cover 14. Further, the vehicle 1 includes a left winker 17L and a right winker 17R. As shown in FIG. 3, the left winker 17L and the right winker 17R are disposed on the handlebar member 6. In a front view of the vehicle, the left winker 17L and the right winker 17R are respectively arranged further leftward and further rightward than the head pipe 3. In a front view of the vehicle, the left winker 17L and the right winker 17R are provided below the position lamp cover 14. The left winker 17L and the right winker 17R are provided above the headlamp 15 to the top.

As shown in FIG. 1 and FIG. 2, the head pipe 3, the steering shaft 5, and the like are covered by the front cover portion 12 from front. Further, the head pipe 3, the steering shaft 5, and the like are covered by a leg shield portion 18 from rear. A left side portion and a right side portion of the leg shield portion 18 are respectively connected to a left side portion and a right side portion of the front cover portion 12.

### [Front cover portion 12]

As shown in FIG. 3, the front cover portion 12 includes an upper front cover portion 12U and a lower front cover portion 12D. The upper front cover portion 12U is provided above the front wheel 8 to the top. The lower front cover portion 12D includes a lower left front cover portion 12DL and a lower right front cover portion 12DR.

The upper front cover portion 12U includes an upper cover portion 12UU, a lower cover portion 12UD, an upper left cover portion 12UL1, a lower left cover portion 12UL2, an upper right cover portion 12UR1, a lower right cover portion 12UR2, and a front cover portion 12UF. The front cover portion 12 includes an opening 12O.

As shown in FIG. 3, the upper cover portion 12UU is provided above the opening 12O. The upper left cover portion 12UL1 and the lower left cover portion 12UL2 are provided on the left of the opening 12O. The upper right cover portion 12UR1 and the lower right cover portion 12UR2 are provided on the right of the opening 12O. The lower cover portion 12UD is provided below the opening 12O.

An upper end of the lower left front cover portion 12DL is connected to the lower left cover portion 12UL2 of the upper front cover portion 12U. An upper end of the lower right front cover portion 12DR is connected to the lower right cover portion 12UR2 of the upper front cover portion 12U.

As shown in FIG. 1, in a left view of the vehicle, the lower left front cover portion 12DL is formed in the manner of extending from top to bottom toward the rear. As shown in FIG. 2, in a right view of the vehicle, the lower right front cover portion 12DR is formed in the manner of extending from top to bottom toward the rear. As shown in FIG. 3, in a front view of the vehicle, the lower left front cover portion 12DL is provided further leftward the front wheel 8. In a front view of the vehicle, the lower right front cover portion 12DR is provided further rightward the front wheel 8.

As shown in FIG. 3, in a front view of the vehicle, the upper left cover portion 12UL1 is provided further leftward than the upper cover portion 12UU to the left. In a front view of the vehicle, at least a part of the lower left cover portion 12UL2 is provided further leftward than the upper left cover portion 12UL1. In a front view of the vehicle, the upper right cover portion 12UR1 is provided further leftward than the upper cover portion 12UU. In a front view of the vehicle, at least a part of the lower right cover portion 12UR2 is provided further leftward than the upper right cover portion 12UR1.

As shown in FIG. 4, in a top view of the vehicle, the upper left cover portion 12UL1 is provided further leftward than the upper cover portion 12UU. In a top view of the vehicle, at least a part of the lower left cover portion 12UL2 is provided further leftward than the upper left cover portion 12UL1. In a top view of the vehicle, the upper right cover portion 12UR1 is provided further rightward than the upper cover portion 12UU. In a top view of the vehicle, at least a part of the lower right cover portion 12UR2 is provided further rightward than the upper right cover portion 12UR1.

As shown in FIG. 3, the front cover portion 12 overlaps the head pipe 3 in a front view of the vehicle. In particular, the upper cover portion 12UU of the front cover portion 12 overlaps the head pipe 3 in a front view of the vehicle.

As shown in FIG. 1 and FIG. 2, the front cover portion 12 overlaps the head pipe 3 in a side view of the vehicle. As shown in FIG. 1, the lower left cover portion 12UL2 of the front cover portion 12 overlaps the head pipe 3 in a left view of the vehicle. As shown in FIG. 2, the lower right cover portion 12UR2 of the front cover portion 12 overlaps the head pipe 3 in a right view of the vehicle.

As shown in FIG. 1 and FIG. 2, a front edge of the front cover portion 12 extends downward and forward in a side view of the vehicle. Herein, the so-called "front edge of the front cover portion 12" means "the front edge of the front cover portion 12 in a side view". Further, the so-called "front edge of the front cover portion 12 extends downward and forward in a side view of the vehicle" means "the front edge of the front cover portion 12 tends to extend downward and forward in a side view of the vehicle", that is, means "in a side view of the vehicle, a front end of the front edge of the front cover portion 12 is closer than a rear end of the front edge of the front cover portion 12 to the front and bottom".

In particular, as shown in FIG. 5, in a cross-section obtained by cutting the central portion of the front cover portion 12 in the vehicle left-right direction by a vertical plane extending in the vehicle front-back direction, the upper cover portion 12UU is formed extending downward from the rear to the front of the vehicle at a "steep gradient" and then extending downward the bottom at a "gentle gradient". Further, as shown in FIG. 1, in a left view of the vehicle, a front edge 12UL1F of the upper left housing portion 12UL1 is formed extending from the rear to front of the vehicle toward the bottom at a "gentle gradient" and then extending toward the bottom at a "steep gradient". Further, in a left view of the vehicle, a part of the upper housing portion 12UU is blocked by the upper left housing portion 12UL1. That is, in a left view of the vehicle, the front edge of the front housing portion 12 is formed by a portion that is not shielded by the upper left cover portion 12UL1and the front edge 12UL1F of the part shielding the upper cover portion 12UU of the upper left cover portion 12UL1. In this way, the front edge of the front cover portion 12 extends downward and forward in a left view of the vehicle. That is, the front edge of the front cover portion 12 tends to extend downward and forward in a left view of the vehicle. Further, in a left view of the vehicle, the front end of the front edge of the front cover portion 12 (a front end of the front edge 12UUF of the upper cover portion 12UU) is in the front of and below the rear end of the front edge of the front cover portion 12 (a rear end of the front edge 12UUF of the upper cover portion 12UU).

Further, as shown in FIG. 2, in a right view of the vehicle, a front edge 12UR1F of the upper right cover portion 12UR1 is formed extending downward from the rear to the front of the vehicle at a "gentle gradient" and then extending downward at a "steep gradient". Further, as discussed above, in a cross-section obtained by cutting the central portion of the front cover portion 12 in the vehicle left-right direction by the vertical plane extending in the vehicle front-back direction, the upper cover portion 12UU is formed extending downward from the rear to the front of the vehicle at a "steep gradient" and then extending downward at a "gentle gradient". Further, in a right view of the vehicle, a part of the upper cover portion 12UU is shielded by the upper right cover portion 12UR1. That is, in a right view of the vehicle, the front edge of the front cover portion 12 is formed by a portion, of a front edge 12UUF of the upper cover portion 12UU, that is not shielded by the upper right cover portion 12UR1and the front edge 12UR1F of the part shielding the upper cover portion 12UU in the upper right cover portion 12UR1. In this way, the front edge of the front cover portion 12 extends downward and forward in a right view of the vehicle. That is, the front edge of the front cover portion 12 tends to extend downward and forward in a right view of the vehicle. Further, in a right view of the vehicle, the front end of the front edge of the front cover portion 12 (the front end of the front edge 12UUF of the upper cover portion 12UU) is in front of and below the rear end of the front edge of the front cover portion 12 (the rear end of the front edge 12UUF of the upper cover portion 12UU).

As shown in FIG. 3 and FIG. 4, the front cover portion 12 includes a front cover luggage carrying surface portion 12P. The front cover portion 12 includes a front cover rear stop portion 12BS, a front cover left stop portion 12LS, a front cover right stop portion 12RS, and a front cover front stop portion 12FS.

In particular, as shown in FIG. 6(D), the upper cover portion 12UU of the upper front cover portion 12U includes: the front cover luggage carrying surface portion 12P, the front cover rear stop portion 12BS, the front cover left stop portion 12LS, the front cover right stop portion 12RS, and the front cover front stop portion 12FS.

Further, as shown in FIG. 3 and FIG. 6(D), the upper left cover portion 12UL1 of the upper front cover portion 12U is connected to a left side portion of the upper cover portion 12UU. Further, the upper right cover portion 12UR1 of the upper front cover portion 12U is connected to a right side portion of the upper cover portion 12UU. As shown in FIG. 4, the front cover portion 12UF of the upper front cover portion 12U is connected to a front side portion of the upper cover portion 12UU.

### [Front cover luggage carrying surface portion 12P]

As shown in FIG. 3, the upper cover portion 12UU of the front cover portion 12 is provided above the headlamp 15. That is, the front cover luggage carrying surface portion 12P of the upper cover portion 12UU is formed above the headlamp 15.

As shown in FIG. 5, in a cross-section obtained by cutting the central portion of the front cover portion 12 in the vehicle left-right direction by the vertical plane extending in the vehicle front-back direction, the front cover luggage carrying surface portion 12P is formed in the manner of extending from a connection portion with the front cover front stop portion 12FS toward the rear of the vehicle approximately horizontally and then extending backward and upward to be connected to the front cover rear stop portion 12BS.

As shown in FIG. 6(D), a recessed portion 12BSR that is recessed backward is provided on the central portion of the front cover rear stop portion 12BS of the upper cover portion 12UU in the vehicle left-right direction. The recessed portion 12BSR is formed in the manner of extending in the vehicle up-down direction. Further, the front cover luggage carrying surface portion 12P of the upper cover portion 12UU includes a recessed portion 12PR that is recessed downward. The recessed portion 12PR is formed in the manner of extending in the vehicle front-back direction. A rear end of the recessed portion 12PR is connected to a lower end of the recessed portion 12BSR. As shown in FIG. 5, a horn H is provided inside the front cover portion 12. The horn H is provided behind the headlamp 15. Further, in a side view of the vehicle, at least a part of the horn H is provided above an upper end of the headlamp 15.

The recessed portion 12PR that is recessed downward is formed at the front cover luggage carrying surface portion 12P, so that a sound collection space S used for amplifying horn sound can be formed inside the front cover portion 12.

As shown in FIG. 6(D), the front cover luggage carrying surface portion 12P includes a left carrying surface 12P1 and a right carrying surface 12P2.

As shown in FIG. 6(A), in a cross-section obtained by cutting the front cover luggage carrying surface portion 12P by a vertical plane extending in the vehicle left-right direction, the left carrying surface 12P1 is formed in the manner of extending in the vehicle left-right direction. In particular, in the cross-section obtained by cutting the front cover luggage carrying surface portion 12P by the vertical plane extending in the vehicle left-right direction, the left carrying surface 12P1 extends from a left end portion of the recessed portion 12PR toward the left in the vehicle left-right direction and downward to be connected to the front cover left stop portion 12LS. Further, in the cross-section obtained by cutting the front cover luggage carrying surface portion 12P by the vertical plane extending in the vehicle left-right direction, the right carrying surface 12P2 is formed in the manner of extending in the vehicle left-right direction. In particular, in the cross-section obtained by cutting the front cover luggage carrying surface portion 12P by the vertical plane extending in the vehicle left-right direction, the right carrying surface 12P2 extends from a right end portion of the recessed portion 12PR toward the right in the vehicle left-right direction and downward to be connected to the front cover right stop portion 12RS.

As shown in FIG. 6(A) and FIG. 6(B), the recessed portion 12PR includes a bottom surface portion 12PR1, a left surface portion 12PR2, and a right surface portion 12PR3. The left surface portion 12PR2 is formed in the manner of extending upward from a left side portion of the bottom surface portion 12PR1 in the vehicle left-right direction. In particular, the left surface portion 12PR2 is formed in the manner of extending upward and leftward from the left side portion of the bottom surface portion 12PR1 in the vehicle left-right direction to be connected to a right side portion of the left carrying surface 12P1. The right surface portion 12PR3 is formed in the manner of extending upward from a right side portion of the bottom surface portion 12PR1 in the vehicle left-right direction. In particular, the right surface portion 12PR3 is formed in the manner of extending upward and rightward from the right side portion of the bottom surface portion 12PR1 to be connected to a left side portion of the right carrying surface 12P2.

An anti-slip member 12PAS1 is disposed on the front cover luggage carrying surface portion 12P. The anti-slip member 12PAS1 is formed by the left surface portion 12PR2 and the right surface portion 12PR3. Further, as shown in FIG. 4, an anti-slip member 12PAS2 is disposed on the front cover luggage carrying surface portion 12P. The anti-slip member 12PAS2 is formed in a rib shape. As shown in FIG. 4, four anti-slip members 12PAS2 in a rib shape are provided on the front cover luggage carrying surface portion 12P. In particular, two anti-slip members 12PAS2 are provided on the left carrying surface 12P1 in the vehicle front-back direction. Two anti-slip members 12PAS2 are provided on the right carrying surface 12P2 in the vehicle front-back direction. Further, the anti-slip member 12PAS2 is longer in the vehicle front-back direction in a top view of the vehicle.

With the front cover luggage carrying surface portion 12P, luggage can be directly carried on the surface of the front cover portion 12. Herein, the so-called "luggage can be directly carried on the surface of the front cover portion 12 " means that similar to JP 2005-145203 A, luggage is carried by using the surface of the front cover portion 12 rather than a front storage basket. The luggage may be carried with at least a part of the luggage contacting the surface of the front cover portion 12, or the luggage may be carried on the front cover portion 12 by using a support member provided on the surface of the front cover portion 12 to fasten of the luggage.

### [Front cover left stop portion 12LS, front cover right stop portion 12RS, front cover rear stop portion 12BS, front cover front stop portion 12FS]

As shown in FIG. 5, the front cover rear stop portion 12BS is formed in the manner of extending upward from a rear portion of the front cover luggage carrying surface portion 12P. In particular, the front cover rear stop portion 12BS is formed in the manner of extending upward and backward from the rear portion of the front cover luggage carrying surface portion 12P. Further, as shown in FIG. 6(A), the front cover left stop portion 12LS is formed in the manner of extending upward from a left side portion of the front cover luggage carrying surface portion 12P. In particular, the front cover left stop portion 12LS is formed in the manner of extending upward and leftward from a left side portion the left carrying surface 12P1 of the front cover luggage carrying surface portion 12P. Further, as shown in FIG. 6(A), the front cover right stop portion 12RS is formed in the manner of extending upward from a right side portion of the front cover luggage carrying surface portion 12P. In particular, the front cover right stop portion 12RS is formed in the manner of extending upward and backward from the right side portion of the right carrying surface 12P2 of the front cover luggage carrying surface portion 12P. As shown in FIG. 5, the front cover front stop portion 12FS is formed in the manner of extending upward from a front portion of the front cover luggage carrying surface portion 12P. In particular, the front cover front stop portion 12FS is formed in the manner of extending upward and forward from the front portion of the front cover luggage carrying surface portion 12P.

Further, as shown in FIG. 5, in a cross-section obtained by cutting the front cover luggage carrying surface portion 12P and the front cover rear stop portion 12BS by a vertical plane extending in the vehicle front-back direction, an angle of the front cover luggage carrying surface portion 12P relative to the horizontal line is less than an angle of the front cover rear stop portion 12BS relative to the horizontal line.

Further, as shown in FIG. 6(A) and FIG. 6(B), in a cross-section obtained by cutting the front cover luggage carrying surface portion 12P and the front cover left stop portion 12LS by the vertical plane extending in the left-right direction, an angle of the front cover left stop portion 12LS relative to the horizontal line is greater than the angle of the front cover luggage carrying surface portion 12P relative to the horizontal line. In particular, in the cross-section obtained by cutting the front cover luggage carrying surface portion 12P and the front cover left stop portion 12LS by the vertical plane extending in the left-right direction, at the portion near the boundary between the front cover luggage carrying surface portion 12P and the front cover left stop portion 12LS, the angle of the front cover left stop portion 12LS relative to the horizontal line is greater the angle of the front cover luggage carrying surface portion 12P relative to the horizontal line.

Further, as shown in FIG. 6(A) and FIG. 6(B), in a cross-section obtained by cutting the front cover luggage carrying surface portion 12P and the front cover right stop portion 12RS by the vertical plane extending in the vehicle left-right direction, an angle of the front cover right stop portion 12RS relative to the horizontal line is greater than the angle of the front cover luggage carrying surface portion 12P relative to the horizontal line. In particular, in the cross-section obtained by cutting the front cover luggage carrying surface portion 12P and the front cover right stop portion 12RS by the vertical plane extending in the vehicle left-right direction, at the portion near the boundary between the front cover luggage carrying surface portion 12P and the front cover right stop portion 12RS, the angle of the front cover left stop portion 12RS relative to the horizontal line is greater than the angle of the front cover luggage carrying surface portion 12P relative to the horizontal line.

As shown in FIG. 5, a distance between a front end 12PF and a rear end 12PB of the front cover luggage carrying surface portion 12P is greater than a distance between a front end and a rear end of the front cover rear stop portion 12BS. The distance between the front end 12PF and the rear end 12PB of the front cover luggage carrying surface portion 12P is greater than a distance between a front end and a rear end of the front cover front stop portion 12FS. Further, the distance between the front end and the rear end of the front cover front stop portion 12FS is less than the distance between the front end and the rear end of the front cover rear stop portion 12BS.

Although not shown in the figure, in a left view of the vehicle, a height of a part of the front cover left stop portion 12LS shielded by the upper left cover portion 12UL1 is the same as a height of the upper left cover portion 12UL1 adjacent to the part. Further, as shown in FIG. 6(A) and FIG. 6(B), a height of the front cover left stop portion 12LS increases from the front of the vehicle toward the rear. Further, in a right view of the vehicle, a height of a part of the front cover left stop portion 12RS shielded by the upper right cover portion 12UR1 is the same as a height of the upper right cover portion 12UR1 adjacent to the part. Further, as shown in FIG. 6(A) and FIG. 6(B), a height of the front cover right stop portion 12RS increases from the front of the vehicle toward the rear.

As shown in FIG. 3, the maximum height of the front cover left stop portion 12LS in the up-down direction is less than the minimum height of the front cover rear stop portion 12BS in the up-down direction. The maximum height of the front cover right stop portion 12RS in the up-down direction is less than the minimum height of the front cover rear stop portion 12BS in the up-down direction.

Further, as shown in FIG. 3, the minimum height of the front cover left stop portion 12LS in the up-down direction is greater than the maximum height of the front cover front stop portion 12FS in the up-down direction. The minimum height of the front cover right stop portion 12RS in the up-down direction is greater than the maximum height of the front cover front stop portion 12FS in the up-down direction.

Preferably, a range of a ratio of the height of the front cover left stop portion 12LS to the length of the front cover luggage carrying surface portion 12P in the vehicle left-right direction is 0.067 to 0.2. A range of a ratio of the height of the front cover right stop portion 12RS to the length of the front cover luggage carrying surface portion 12P in the vehicle left-right direction is 0.067 to 0.2. More preferably, a range of a ratio of the height of the front cover left stop portion 12LS to the length of the front cover luggage carrying surface portion 12P in the vehicle left-right direction is 0.083 to 0.143. A range of a ratio of the height of the front cover right stop portion 12RS to the length of the front cover luggage carrying surface portion 12P in the vehicle left-right direction is 0.083 to 0.143.

### [Rope member mounting portion]

The vehicle 1 includes a rope member mounting portion 20. The luggage that is directly carried on the front cover luggage carrying surface portion 12P can be fastened on the front cover luggage carrying surface portion 12P by a rope member mounted on the rope member mounting portion 20.

In this implementation aspect, the rope member mounting portion 20 is formed by a part of the front cover portion 12.

The rope member mounting portion 20 includes a left rope member mounting portion 20L, and a right rope member mounting portion 20R. The left rope member mounting portion 20L is formed by a part of the front cover portion 12. The right rope member mounting portion 20R is formed by a part of the front cover portion 12.

In particular, as shown in FIG. 1, the upper left cover portion 12UL1 of the upper front cover portion 12U includes a relatively long groove 12UL1G formed in the vehicle front-back direction. As shown in FIG. 6(A) to FIG. 6(C), an opening 12UOL1, an opening 12UOL2, and an opening 12UOL3 are formed in the upper surface of the upper left cover portion 12UL1 where the groove 12UL1G is formed. The left rope member mounting portion 20L is formed by the opening 12UOL1, the opening 12UOL2, and the opening 12UOL3.

Further, as shown in FIG. 2, the upper right cover portion 12UR1 of the upper front cover portion 12U includes a relatively long groove 12UR1G formed in the vehicle front-back direction.

As shown in FIG. 6(A) to FIG. 6(C), an opening 12UOR1, an opening 12UOR2, and an opening 12UOR3 are formed in the upper surface of the upper right cover portion 12UR1 where the groove 12UR1G is formed. The right rope member mounting portion 20R is formed by the opening 12UOR1, the opening 12UOR2, and the opening 12UOR3.

Further, as shown in FIG. 6(A) to FIG. 6(C), the left rope member mounting portion 20L is arranged further leftward than the front cover left stop portion 12LS in a front view of the vehicle. The right rope member mounting portion 20R is arranged further rightward than the front cover right stop portion 12RS in a front view of the vehicle.

Further, the rope member mounting portion 20 includes an upper rope member mounting portion 20U. In particular, the upper cover portion 12UU of the front cover portion 12 includes an upper left protruding portion 12UUP1 and an upper right protruding portion 12UUP2. The upper rope member mounting portion 20U is formed by the upper left protruding portion 12UUP1 and the upper right protruding portion 12UUP2.

As shown in FIG. 3, an opening 12UOU1 is formed in the upper left protruding portion 12UUP1. An opening 12UOU2 is formed in the upper right protruding portion 12UUP2. The upper left protruding portion 12UUP1 is arranged further leftward the head pipe 3, and is formed in the manner of protruding upward from the front cover rear stop portion 12BS. The upper right protruding portion 12UUP2 is arranged further rightward the head pipe 3, and is formed in the manner of protruding from the front cover rear stop portion 12BS. That is, the upper rope member mounting portion 20U is formed in the manner of protruding upward from the front cover rear stop portion 12BS.

Further, the rope member mounting portion 20 includes a front rope member mounting portion 20F.As shown in FIG. 5, an opening 12UOF is provided in a downward-facing surface of the front cover portion 12UF, which also forms an upper edge of the opening 12O in a front view of the vehicle. The opening 12UOF is provided in front of the sound collection space S of the vehicle, for sound of the horn H to travel out of the vehicle body. The front rope member mounting portion 20F is formed by the opening 12UOF.

As shown in FIG. 3 and FIG. 5, the front rope member mounting portion 20F is below the front cover front stop portion 12FS in a front view of the vehicle and is in front of the recessed portion 12PR in a side view of the vehicle.

Next, a method for fastening luggage on the front cover portion 12 is described.

In a case that luggage is fastened on the front cover portion 12 by a rope member provided transversely in the vehicle left-right direction on the front cover luggage carrying surface portion 12P of the front cover portion 12 , one end of the rope member may be fastened by using the opening 12UOL1, the opening 12UOL2, or the opening 12UOL3 (the left rope member mounting portion 20L), and the other end of the rope member may be fastened by using the opening 12UOR1, the opening 12UOR2, or the opening 12UOR3 (the right rope member mounting portion 20R).

Further, in a case that luggage is fastened on the front cover portion 12 by a rope member provided longitudinally in the vehicle front-back direction on the front cover luggage carrying surface portion 12P of the front cover portion 12, one end of the rope member may be fastened by using the opening 12UOU1 of the upper left protruding portion 12UUP1 (the upper rope member mounting portion 20U) or the opening 12UOU2 of the upper right protruding portion 12UUP2 (the upper rope member mounting portion 20U), and the other end of the rope member may be fastened by using the opening 12UOF (the front rope member mounting portion 20F).

### [Second implementation aspect]

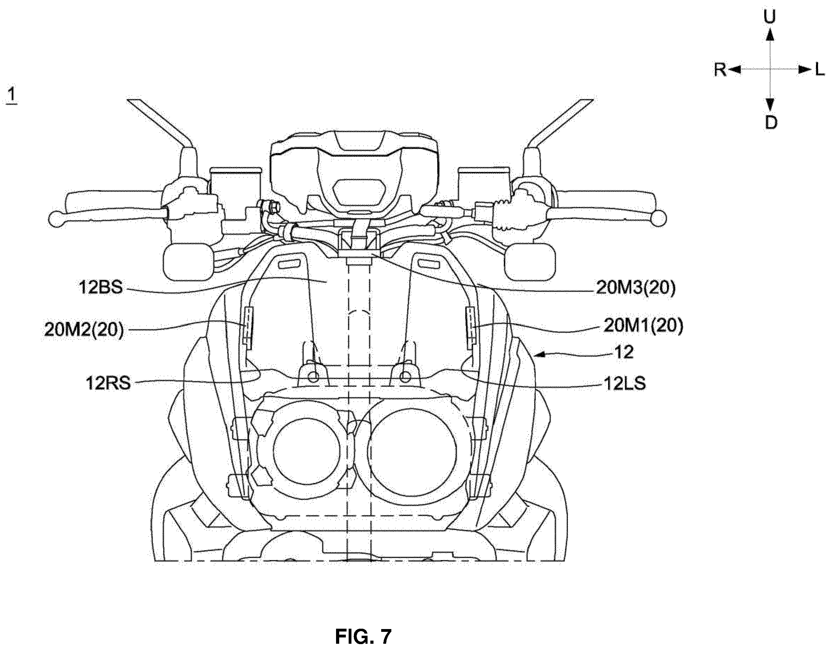

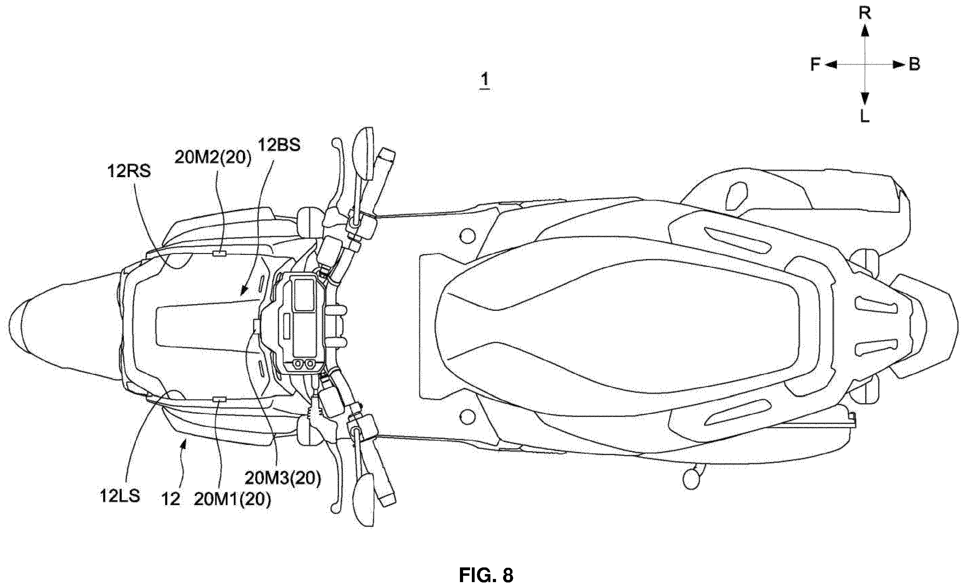

Next, the second implementation aspect is described with reference to FIG. 7 and FIG. 8. FIG. 7 is an enlarged view of a vehicle front view of the vehicle 1 according to the second implementation aspect. FIG. 8 is a vehicle top view of the vehicle 1 according to the second implementation aspect.

The second implementation aspect has all the features of the vehicle 1 in the first implementation aspect. Moreover, in the following description, the foregoing description of the positions same as those in the implementation aspect of the present teaching is appropriately omitted.

In the second implementation aspect, the rope member mounting portion 20 is formed separately from the front cover portion 12, and is at least disposed on the front cover rear stop portion 12BS, the front cover left stop portion 12LS, or the front cover right stop portion 12RS.

In particular, as shown in FIG. 7 and FIG. 8, the rope member mounting portion 20 includes a mounting portion 20M1, a mounting portion 20M2, and a mounting portion 20M3. The mounting portion 20M1 is fastened on the front cover left stop portion 12LS. The mounting portion 20M2 is fastened on the front cover right stop portion 12RS. The mounting portion 20M3 is fastened on the front cover rear stop portion 12BS. In this way, the mounting portion 20M1, the mounting portion 20M2, and the mounting portion 20M3 are all formed separately from the front cover portion 12.

Each of the mounting portion 20M1, the mounting portion 20M2, and the mounting portion 20M3 is provided with a hole (not shown in the figure). The rope member that fastens luggage on the front cover portion 12 may pass through the hole in the mounting portion 20M 1, the mounting portion 20M2, or the mounting portion 20M3 to be knotted for fastening.

### [Third implementation aspect]

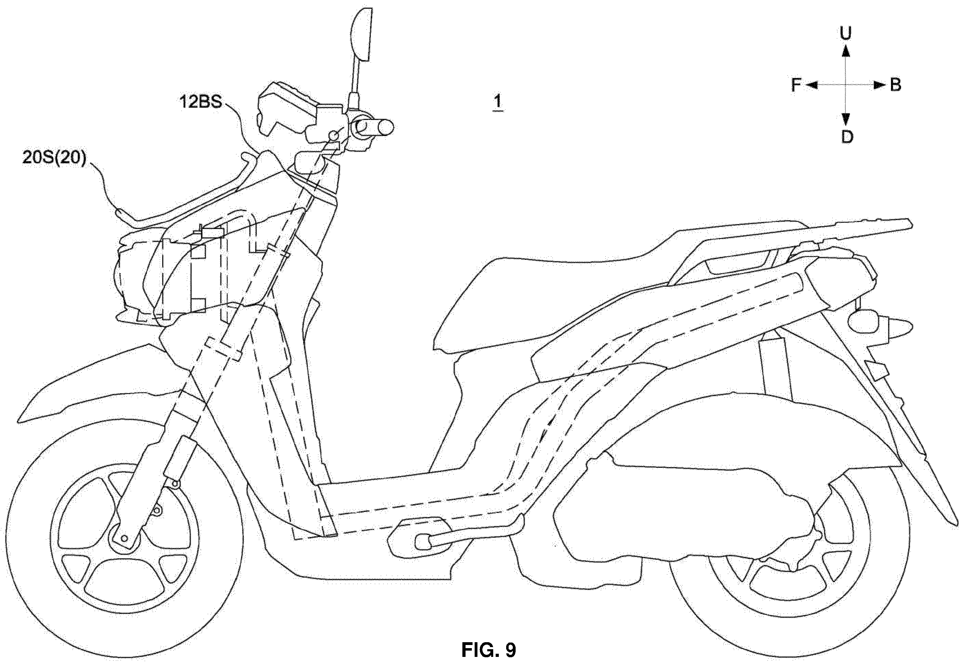

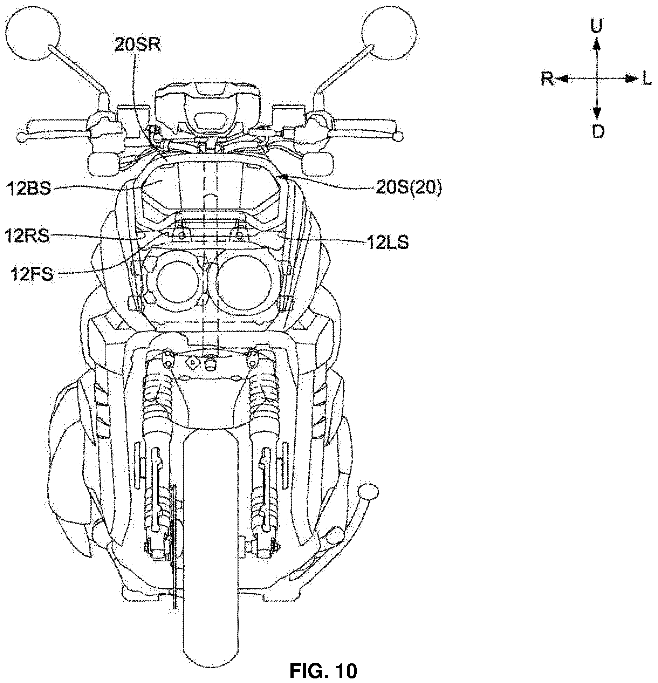

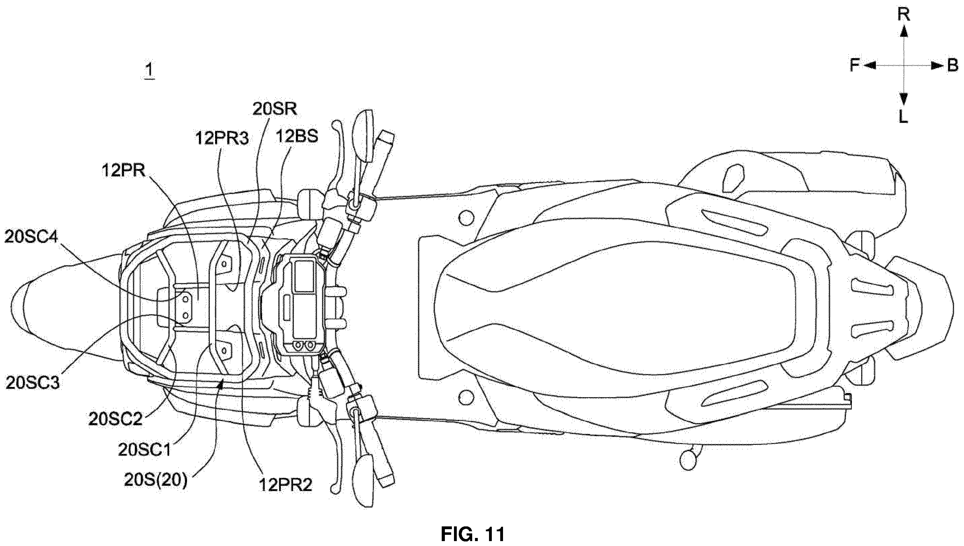

Next, the third implementation aspect is described with reference to FIG. 9 to FIG. 11. FIG. 9 is a vehicle left side view of the vehicle 1 according to the third implementation aspect. FIG. 10 is a vehicle front view of the vehicle 1 according to the third implementation aspect. FIG. 11 is a vehicle top view of the vehicle 1 according to the third implementation aspect.

The third implementation aspect has all the features of the vehicle 1 in the first implementation aspect. Moreover, in the following description, the foregoing description of the positions same as those in the implementation aspect of the present teaching is appropriately omitted.

In the third implementation aspect, the rope member mounting portion 20 is formed separately from the front cover portion 12.

In particular, as shown in FIG. 9 to FIG. 11, the rope member mounting portion 20 includes a luggage support member 20S. The luggage support member 20S is disposed above the front cover left stop portion 12LS, the front cover rear stop portion 12BS, the front cover right stop portion 12RS, and the front cover front stop portion 12FS.

Further, as shown in FIG. 10 and FIG. 11, the luggage support member 20S includes a loop portion 20SR. The loop portion 20SR is disposed above the front cover left stop portion 12LS, the front cover rear stop portion 12BS, the front cover right stop portion 12RS, and the front cover front stop portion 12FS in the manner of surrounding the front cover luggage carrying surface portion 12P in a top view of the vehicle. In this way, the luggage support member 20S forms a loop in a top view of the vehicle.

Further, in a top view of the vehicle, at least a part of the rope member mounting portion 20 is configured in the manner of overlapping the front cover luggage carrying surface portion 12P.

In particular, the luggage support member 20S includes a first connection portion 20SC1, a second connection portion 20SC2, a third connection portion 20SC3, and a fourth connection portion 20SC4.

As shown in FIG. 11, the first connection portion 20SC1 and the second connection portion 20SC2 are configured in parallel in the vehicle front-back direction. Further, in a top view of the vehicle, the first connection portion 20SC1 and the second connection portion 20SC2 both extend in the vehicle left-right direction, and are formed in the manner of being connected to the loop portion 20SR located above the front cover left stop portion 12LS and the loop portion 20SR located above the front cover right stop portion 12RS. That is, the first connection portion 20SC1 and the second connection portion 20SC2 are formed above the front cover luggage carrying surface portion 12P of the front cover portion 12 in the manner of spanning the vehicle left-right direction. That is, in a top view of the vehicle, the first connection portion 20SC1 and the second connection portion 20SC2 are configured in the manner of overlapping the front cover luggage carrying surface portion 12P is.

Further, the third connection portion 20SC3 and the fourth connection portion 20SC4 are configured in parallel in the vehicle left-right direction.

Further, in a top view of the vehicle, the third connection portion 20SC3 and the fourth connection portion 20SC4 are both formed in the manner of extending in the vehicle front-back direction to be connected to the first connection portion 20SC1 and the second connection portion 20SC2. The third connection portion 20SC3 is configured in the manner of overlapping the left surface portion 12PR2 of the recessed portion 12PR of the front cover luggage carrying surface portion 12P in a top view of the vehicle. The fourth connection portion 20SC4 is configured in the manner of overlapping the right surface portion 12PR3 of the recessed portion 12PR of the front cover luggage carrying surface portion 12P in a top view of the vehicle. That is, the third connection portion 20SC3 and the fourth connection portion 20SC4 are formed above the front cover luggage carrying surface portion 12P of the front cover portion 12 in the manner of spanning the vehicle front-back direction. That is, in a top view of the vehicle, the third connection portion 20SC3 and the fourth connection portion 20SC4 are configured in the manner of overlapping the front cover luggage carrying surface portion 12P.

In this way, a rope member that fastens luggage to the front cover portion 12 can be fastened by using a plurality of positions of the loop portion 20SR, the first connection portion 20SC1, the second connection portion 20SC2, the third connection portion 20SC3, and the fourth connection portion 20SC4.

### [Effects of the implementation aspects]

The leaning vehicle 1 of the present teaching includes: the head pipe 3, the steering apparatus 4, the front cover portion 12, and the headlamp 15. The steering apparatus 4 has the steering shaft 5, the handlebar member 6, the fork 7, and the front wheel 8. The steering shaft 5 is rotatably inserted in the head pipe 3. The handlebar member 6 is to be operated by a rider. The fork 7 is connected to the lower portion of the steering shaft 5. The front wheel 8 is supported on the fork 7. The front cover portion 12 is provided below the handlebar member 6 and above the front wheel 8. The headlamp 15 is provided on the lower portion of the front cover portion 12. The front cover portion 12 overlaps the head pipe 3 in a front view of the vehicle, and overlaps the head pipe 3 in a side view of the vehicle. A front edge of the front cover portion 12 extends downward and forward in a side view of the vehicle. The front cover portion 12 includes: the front cover luggage carrying surface portion 12P, the front cover rear stop portion 12BS, the front cover left stop portion 12LS, and the front cover right stop portion 12RS. The front cover luggage carrying surface portion 12P is formed above the headlamp 15, and luggage can be directly carried on the surface of the front cover portion 12. The front cover rear stop portion 12BS is formed in the manner of extending upward from the rear portion of the front cover luggage carrying surface portion 12P. The front cover left stop portion 12LS is formed in the manner of extending upward from the left side portion of the front cover luggage carrying surface portion 12P. The front cover right stop portion 12RS is formed in the manner of extending upward from the right side portion of the front cover luggage carrying surface portion 12P. The leaning vehicle 1 further includes the rope member mounting portion 20. The luggage that is directly carried on the front cover luggage carrying surface portion 12P may be fastened on the front cover luggage carrying surface portion 12P by a rope member mounted on the rope member mounting portion 20. In the cross-section obtained by cutting the front cover luggage carrying surface portion 12P and the front cover rear stop portion 12BS by the vertical plane extending in the vehicle front-back direction, the angle of the front cover luggage carrying surface portion 12P relative to the horizontal line is less than the angle of the front cover rear stop portion 12BS relative to the horizontal line. In the cross-section obtained by cutting the front cover luggage carrying surface portion 12P and the front cover left stop portion 12LS by the vertical plane extending in the vehicle left-right direction, the angle of the front cover left stop portion 12LS relative to the horizontal line is greater than the angle of the front cover luggage carrying surface portion 12P relative to the horizontal line. In the cross-section obtained by cutting the front cover luggage carrying surface portion 12P and the front cover right stop portion 12RS by the vertical plane extending in the vehicle left-right direction, the angle of the front cover right stop portion 12RS relative to the horizontal line is greater than the angle of the front cover luggage carrying surface portion 12P relative to the horizontal line.

Concretely speaking, in the leaning vehicle 1 of the present teaching, the front cover portion 12 has the front cover luggage carrying surface portion 12P that can directly carry luggage on the surface of the front cover portion 12. In this way, a large front storage basket does not further need to be disposed to store the luggage, and therefore a compact front portion of the vehicle can be ensured. Further, the rider can easily acquire a stored object carried on the front cover luggage carrying surface portion 12P without turning around while riding, so the convenience for a rider can be further improved.

Further, the luggage that is directly carried on the front cover luggage carrying surface portion 12P may be fastened on the front cover luggage carrying surface portion 12P by a rope member mounted on the rope member mounting portion 20. In this way, stable luggage storage can be ensured.

Further, in the leaning vehicle 1 of the present teaching, the front cover portion 12 includes the front cover rear stop portion 12BS formed in the manner of extending upward from the rear portion of the front cover luggage carrying surface portion 12P. Further, in the cross-section obtained by cutting the front cover luggage carrying surface portion 12P and the front cover rear stop portion 12BS by the vertical plane extending in the vehicle front-back direction, the angle of the front cover luggage carrying surface portion 12P relative to the horizontal line is less than the angle of the front cover rear stop portion 12BS relative to the horizontal line.

That is, compared with the front cover rear stop portion 12BS, the front cover luggage carrying surface portion 12P is formed to be closer to a horizontal plane. Therefore, it is difficult for the luggage directly carried on the front cover luggage carrying surface portion 12P to move toward the front and bottom when the vehicle stops, moves at a low speed, or the like.

Further, the angle of the front cover rear stop portion 12BS relative to the horizontal line is set to be greater than the angle of the front cover luggage carrying surface portion 12P relative to the horizontal line. As a result, when the vehicle is moving at a high speed, the front cover rear stop portion 12BS may be used to inhibit the luggage directly carried on the front cover luggage carrying surface portion 12P from moving toward the rear and top.

That is, with the angle design of the front cover luggage carrying surface portion 12P and the front cover rear stop portion 12BS, stable luggage storage can be further ensured.

In another aspect, in the leaning vehicle 1 of the present teaching, the headlamp 15 is provided on the lower portion of the front cover portion 12, and the front cover luggage carrying surface portion 12P is formed above the headlamp 15.

In this way, the front cover rear stop portion 12BS formed in the manner of extending upward from the rear portion of the front cover luggage carrying surface portion 12P is relatively short in the up-down direction. Therefore, airflow that hits the front cover rear stop portion 12BS while driving can be reduced.

Further, it is not necessary to configure the headlamp 15 on the handlebar cover, and the handlebar cover may be formed relatively small or the handlebar cover may be omitted. Therefore, a compact front portion of the vehicle can be further ensured.

In particular, when the front cover luggage carrying surface portion 12P and the front cover rear stop portion 12BS are formed at different angles, the front cover rear stop portion 12BS is formed at an angle closer to a right angle than the front cover luggage carrying surface portion 12P. Therefore, compared with a case that the front cover rear stop portion 12BS is formed at an angle closer to a straight angle, the front cover rear stop portion 12BS has a larger height in the up-down direction. Further, the more the front cover luggage carrying surface portion 12P is formed at the lower portion of the front cover portion 12, the larger height the front cover rear stop portion 12BS has in the up-down direction. If the front cover rear stop portion 12BS has a larger height in the up-down direction, there are fears in the occurrence of stronger airflow that hits the front cover rear stop portion 12BS while driving.

Therefore, in the present teaching, the headlamp 15 is provided on the lower portion of the front cover portion 12, so that the front cover rear stop portion 12BS can be relatively short in the up-down direction, thereby reducing airflow that hits the front cover rear stop portion 12BS while driving.

Further, in a case that a luggage carrying surface portion of the front cover portion 12 is formed above the headlamp 15, the front cover luggage carrying surface portion 12P is formed at a higher portion of the front cover portion 12, and therefore may become longer in the vehicle front-back direction. In this way, stable luggage storage can be further ensured.

Further, in the leaning vehicle 1 of the present teaching, the front cover portion 12 has the front cover left stop portion 12LS and the front cover right stop portion 12RS that are respectively formed in the manner of extending upward from the left side portion and the right side portion of the front cover luggage carrying surface portion 12P. Further, in the cross-section obtained by cutting the front cover luggage carrying surface portion 12P, the front cover left stop portion, and the front cover right stop portion by the vertical plane extending in the vehicle left-right direction, angles of the front cover left stop portion and the front cover right stop portion relative to the horizontal line are both greater than the angle of the front cover luggage carrying surface portion 12P relative to the horizontal line.

In this way, the width of the front cover luggage carrying surface portion 12P in the vehicle left-right direction may be ensured, and the luggage can be inhibited from moving in the width direction of the vehicle when the leaning vehicle 1 transversely leans. Therefore, stable luggage storage can be further ensured.

In particular, in a case that the leaning vehicle 1 leans toward the left of the vehicle, the luggage directly carried on the front cover luggage carrying surface portion 12P may move toward the left of the vehicle. Further, in a case that the leaning vehicle 1 leans toward the right of the vehicle, the luggage directly carried on the front cover luggage carrying surface portion 12P may move toward the right of the vehicle.

Therefore, in the leaning vehicle 1 of the present teaching, the front cover left stop portion 12LS is formed at an angle closer than the front housing luggage carrying surface portion 12P to a right angle. Therefore, in a case that the tilting vehicle 1 tilts toward the left of the vehicle, the front housing left stop portion 12LS may be used to inhibit the luggage that is directly carried on the front housing luggage carrying surface portion 12P from deviating toward the left and top of the vehicle.

Further, the front housing right stop portion 12RS is formed at an angle closer than the front housing luggage carrying surface portion 12P to a right angle. Therefore, in a case that the tilting vehicle 1 tilts toward the right of the vehicle, the front housing right stop portion 12RS may be used to inhibit the luggage that is directly carried on the front housing luggage carrying surface portion 12P from deviating toward the right and top of the vehicle.

In this way, the tilting vehicle 1 may be provided, so that a small front portion of the vehicle can be maintained, a rope member is used for fastening, and the shape of a front housing cover is deliberately designed. In this way, regardless of the running status of the vehicle, luggage can be stably and directly carried on the front cover portion 12, thereby improving convenience.

The front cover portion 12 further includes: the front cover front stop portion 12FS formed in the manner of extending upward from the front portion of the front cover luggage carrying surface portion 12P.

As discussed above, to reduce the impact of airflow that hits the front cover portion 12 while driving, the front edge of the front cover portion 12 is formed in the manner of extending forward and downward. In a case that the front cover front stop portion 12FS formed in the manner of extending upward from the front portion of the front cover luggage carrying surface portion 12P is further disposed, with the front cover front stop portion 12FS, the luggage can be further inhibited from moving forward and downward when the vehicle stops, moves at a low speed, or the like. Therefore, stable luggage storage can be further ensured.

Preferably, the rope member mounting portion 20 includes the left rope member mounting portion 20L and the right rope member mounting portion 20R. The left rope member mounting portion 20L is formed by a part of the front cover portion 12, and is provided further leftward than the front cover left stop portion 12LS in a front view of the vehicle. The right rope member mounting portion 20R is formed by a part of the front cover portion 12, and is provided further rightward than the front cover right stop portion 12RS in a front view of the vehicle.

In a case that a part of the front cover portion 12 is used to form the rope member mounting portion 20, a space for configuring the rope member mounting portion 20 separately from the front cover portion 12 can be saved. Therefore, a compact front portion of the vehicle can be further ensured.

Further, the left rope member mounting portion 20L is provided further leftward than the front cover left stop portion 12LS, and the right rope member mounting portion 20R is provided further rightward than the front cover right stop portion 12RS. The rope member may span the front cover luggage carrying surface portion 12P in the vehicle left-right direction, and the luggage is fastened on the front cover luggage carrying surface portion from above 12P. Therefore, stable luggage storage can be further ensured.

The front cover luggage carrying surface portion 12P includes a recessed portion 12PR that is recessed downward. The rope member mounting portion 20 (20F) is formed by a part of the front cover portion 12, and is provided below the entirety of the front cover front stop portion 12FS in a front view of the vehicle, and provided in front of the recessed portion 12PR in a side view of the vehicle.

In this case, the recessed portion 12PR that is recessed downward is formed in the front cover luggage carrying surface portion 12P, so that inside the vehicle body of the front cover portion 12, a space below the recessed portion 12PR is narrower than a space below a portion other than the recessed portion 12PR. Therefore, the sound collection space S of the horn H may be formed. Further, the opening 12UOF for sound to travel out of the vehicle body is provided at a position in front of the sound collection space S of the vehicle. The rope member mounting portion 20 (20F) is formed at the portion where the opening 12UOF is formed in the front cover portion 12, a space for configuring the rope member mounting portion 20 separately from the front cover portion 12 can be saved. Therefore, a compact front portion of the vehicle can be further ensured.

Preferably, the rope member mounting portion 20 (20U) is formed by a part of the front cover portion 12, and is formed in the manner of protruding upward from the front cover rear stop portion 12BS.

In a case that a part of the front cover portion 12 is used to form the rope member mounting portion 20 (20U), a space for configuring the rope member mounting portion 20 (20U) separately from the front cover portion 12 can be saved. Therefore, a compact front portion of the vehicle can be further ensured.

Further, the rope member mounting portion 20 (20U) is disposed on the front cover rear stop portion 12BS formed in the manner of protruding upward from the front cover rear stop portion 12BS, a rope member mounted on the rope member mounting portion 20 (20U) may provide the luggage with fastening forces backward and upward. Therefore, the luggage can be further inhibited from moving forward and downward when the vehicle stops, moves at a low speed, or the like. Therefore, stable luggage storage can be further ensured.

In a not claimed embodiment, the rope member mounting portion 20 is formed separately from the front cover portion 12, and is at least disposed on the front cover rear stop portion 12BS, the front cover left stop portion 12LS, or the front cover right stop portion 12RS.

The rope member mounting portion 20 is formed separately from the front cover portion 12, and is at least disposed on the front cover rear stop portion 12BS, the front cover left stop portion 12LS, or the front cover right stop portion 12RS, so that the arrangement of the rope member mounting portion 20 can be simplified. In this way, storage stability can be ensured by using a simple method.

In a not claimed embodiment, the rope member mounting portion 20 is formed separately from the front cover portion 12, forms a loop in a top view of the vehicle, and is disposed above the front cover left stop portion 12LS, the front cover rear stop portion 12BS, the front cover right stop portion 12RS, and the front cover front stop portion 12FS.

In this case, the rope member mounting portion 20 forms a loop, is disposed above the front cover left stop portion 12LS, the front cover rear stop portion 12BS, the front cover right stop portion 12RS, and the front cover front stop portion 12FS, the rope member mounting portion 20 may be formed relatively large, and there are more positions where rope members can be mounted. Therefore, because the degree of freedom of mounting a rope member can be increased in accordance with the shape or weight of the luggage, the strength of fastening the luggage on the front cover portion 12 by using a rope member can be improved. In this way, stable luggage storage can be further ensured.

Preferably, in a top view of the vehicle, at least a part of the rope member mounting portion 20 is configured in the manner of overlapping the front cover luggage carrying surface portion 12P.

At least a part of the rope member mounting portion 20 is configured in the manner of overlapping the front cover luggage carrying surface portion 12P in a top view of the vehicle, a position where a rope member can be mounted can be close to the luggage. In this way, the strength of fastening the luggage on the front cover portion 12 by a rope member can be improved, so that stable luggage storage is further ensured.

Preferably, the distance between the front end and the rear end of the front cover front stop portion 12FS is less than a distance between the front end and the rear end of the front cover rear stop portion 12BS.

In this case, the distance between the front end and the rear end of the front cover front stop portion 12FS is set to be less than the distance between the front end and the rear end of the front cover rear stop portion 12BS. The length of the front cover front stop portion 12FS in the vehicle front-back direction may be formed relatively short. In this way, the front cover luggage carrying surface portion 12P may be formed relatively long in the vehicle front-back direction. In this way, stable luggage storage can be further ensured.

Preferably, the maximum height of the front cover left stop portion 12LS in the up-down direction is less than the minimum height of the front cover rear stop portion 12BS in the up-down direction, and the maximum height of the front cover right stop portion 12RS in the up-down direction is less than the minimum height of the front cover rear stop portion 12BS in the up-down direction.

In this case, the heights of the front cover left stop portion 12LS and the front cover right stop portion 12RS are formed to be less than that of the front cover rear stop portion 12BS, so that the front cover left stop portion 12LS and the front cover right stop portion 12RS can be small. In this way, because the front cover left stop portion 12LS and the front cover right stop portion 12RS may be formed relatively low, even if relatively large luggage is placed on the front cover luggage carrying surface portion 12P, the front cover left stop portion 12LS and the front cover right stop portion 12RS may be used to fasten only the bottom portion of the luggage, to inhibit the luggage from moving in the left-right direction, and a luggage storage space in the left-right direction closer than the front cover left stop portion 12LS and the front cover right stop portion 12RS to the top is provided to be relatively large.

Further, because a stored object placed on the front cover luggage carrying surface portion 12P can be easily reached and acquired, stable luggage storage can be ensured, and the convenience can be further improved for a rider.

Preferably, the maximum height of the front cover left stop portion 12LS in the up-down direction is less than the minimum height of the front cover rear stop portion 12BS in the up-down direction. The maximum height of the front cover right stop portion 12RS in the up-down direction is less than the minimum height of the front cover rear stop portion 12BS in the up-down direction. The minimum height of the front cover left stop portion 12LS in the up-down direction is greater than the maximum height of the front cover front stop portion 12FS in the up-down direction. The minimum height of the front cover right stop portion 12RS in the up-down direction is greater than the maximum height of the front cover front stop portion 12FS in the up-down direction.

In this case, the heights of the front cover front stop portion 12FS, the front cover left stop portion 12LS, and the front cover right stop portion 12RS are set to be less than that of the front cover rear stop portion 12BS, so that the front cover front stop portion 12FS, the front cover left stop portion 12LS, and the front cover right stop portion 12RS can be small.

In this way, because the front cover front stop portion 12FS, the front cover left stop portion 12LS, and the front cover right stop portion 12RS may be formed relatively low, even if relatively large luggage is placed on the front cover luggage carrying surface portion 12P, the front cover front stop portion 12FS, the front cover left stop portion 12LS, and the front cover right stop portion 12RS may be used to fasten only the bottom portion of the luggage, to inhibit the luggage from moving forward and in the left-right direction, and luggage storage spaces in the vehicle front-back direction and the left-right direction closer than the front cover front stop portion 12FS, the front cover left stop portion 12LS, and the front cover right stop portion 12RS to the top are provided to be relatively large.

Further, because a stored object placed on the front cover luggage carrying surface portion 12P can be easily reached and acquired, stable luggage storage can be ensured, and the convenience can be further improved for a rider.

Preferably, the front cover luggage carrying surface portion 12P is provided with the anti-slip members 12PAS1 and 12PAS2.

In a case that luggage is stored in the manner of being directly placed on the front cover luggage carrying surface portion 12P, the anti-slip members 12PAS1 and 12PAS2 disposed on the front cover luggage carrying surface portion 12P may be further used to inhibit the luggage from moving in the vehicle front-back direction or the left-right direction. In this way, stable luggage storage can be further ensured

Preferably, the anti-slip member 12PAS2 has a rib form.

In a case of storing luggage in the manner of being directly placed on the front cover luggage carrying surface portion 12P, the anti-slip member 12PAS2 disposed on the front cover luggage carrying surface portion 12P may be used to further inhibit the luggage from moving in the vehicle front-back direction or the vehicle left-right direction. Further, in a case that the anti-slip member 12PAS2 is disposed in a rib form, a space for arranging the anti-slip member 12PAS2 may be saved. Therefore, a compact front portion of the vehicle can be further ensured.

Further, a contact area with the luggage may become larger, so that the efficacy of inhibiting movement can be improved. In this way, stable luggage storage can be further ensured.

Preferably, the front cover luggage carrying surface portion 12P includes a recessed portion 12PR that is recessed downward. The recessed portion 12PR includes the bottom surface portion 12PR1, the left surface portion 12PR2 formed in the manner of extending upward from the left side portion of the bottom surface portion 12PR1 in the vehicle left-right direction, and the right surface portion 12PR3 formed in the manner of extending upward from the right side portion of the bottom surface portion 12PR1 in the vehicle left-right direction. The anti-slip member 12PAS1 is formed by the left surface portion 12PR2 and the right surface portion 12PR3.

In a case that luggage is stored in the manner of being directly placed on the front cover luggage carrying surface portion 12P, the anti-slip member 12PAS1 disposed on the front cover luggage carrying surface portion 12P may be used to further inhibit the luggage from moving in the vehicle front-back direction or the vehicle left-right direction. In this way, stable luggage storage can be further ensured.

In another aspect, the recessed portion 12PR that is recessed downward the bottom is formed in the front cover luggage carrying surface portion 12P. Inside the vehicle body of the front cover portion 12, a space below the recessed portion 12PR to the bottom is narrower than a space below a portion other than the recessed portion 12PR to the bottom, the sound collection space S of the horn H may be formed. The portion forming the recessed portion 12PR in the front cover portion 12 is used to form the anti-slip member 12PAS1. In this way, the space for arranging the anti-slip member 12PAS1 separately from the front cover portion 12 can be saved. Therefore, a compact front portion of the vehicle can be further ensured.

### Other variant examples

For example, vehicle body covers such as the front cover portion 12 and the leg shield portion 18 are appearance members, and may be separately appropriately formed of a material such as plastic. Various cover members are integrally formed products formed through injection molding. However, a plurality of members may be included. For example, in the front cover portion 12 in the implementation aspect, the upper front cover portion 12U, the lower left front cover portion 12DL, and the lower right front cover portion 12DR are separately formed, and may be alternatively integrated. In the upper front cover portion 12U, the upper cover portion 12UU, the lower cover portion 12UD, the upper left cover portion 12UL1, the lower left cover portion 12UL2, the upper right cover portion 12UR1, the lower right cover portion 12UR2, and the front cover portion 12UF are separately formed, and may be alternatively integrated. In the upper cover portion 12UU, the front cover luggage carrying surface portion 12P, the front cover rear stop portion 12BS, the front cover left stop portion 12LS, the front cover right stop portion 12RS, and the front cover front stop portion 12FS are separately formed, and may be alternatively integrated.

Further, in the implementation aspect, the headlamp 15 is formed by double headlamps arranged in parallel in the left-right direction. However, the implementation aspect is not limited thereto. For example, the headlamp 15 may be formed by a single headlamp.

Further, the front edge of the front cover portion 12 tends to extend downward and forward in a side view of the vehicle. That is, in a side view of the vehicle, it is only necessary to enable the front end of the front edge of the front cover portion 12 to be located below the rear end of the front edge of the front cover portion 12 to the bottom. For example, in a side view of the vehicle, the front edge of the front cover portion 12 may be formed in the manner of extending downward from the rear to front of the vehicle at a maintained gradient, or may be formed in the manner of extending downward from the rear to front of the vehicle at a "steep gradient" and then extending downward at a "gentle gradient ", or may be formed in the manner of extending downward from the rear to front of the vehicle at a "gentle gradient" and then extending downward at a "steep gradient". Further, in a side view of the vehicle, the front edge of the front cover portion 12 may be alternatively formed in the manner of extending toward the front of the vehicle and then extending toward the bottom of the vehicle first and then further extending toward the front of the vehicle.

Further, in the implementation aspect, in the cross-section obtained by cutting the central portion of the front cover portion 12 in the vehicle left-right direction by a vertical plane extending in the vehicle front-back direction, the front cover luggage carrying surface portion 12P is formed in the manner of extending from the connection portion of the front cover front stop portion 12FS toward the rear of the vehicle approximately horizontally and then extending toward the rear and top of the vehicle to be connected to the front cover rear stop portion 12BS. However, the implementation aspect is not limited thereto, provided that in the cross-section obtained by cutting the front cover luggage carrying surface portion 12P and the front cover rear stop portion 12BS by the vertical plane extending in the vehicle front-back direction, the angle of the front cover luggage carrying surface portion 12P relative to the horizontal line is set to be less than the angle of the front cover rear stop portion 12BS relative to the horizontal line. For example, the front cover luggage carrying surface portion 12P may be formed in the manner of extending from the connection portion of the front cover front stop portion 12FS toward the rear and top of the vehicle in the vehicle front-back direction to be connected to the front cover rear stop portion 12BS, or may be formed to be generally approximately horizontal in the vehicle front-back direction.

Further, in the implementation aspect, in the cross-section obtained by cutting the front cover luggage carrying surface portion 12P by the vertical plane extending in the vehicle left-right direction, the left carrying surface 12P1 extends to the left in the vehicle left-right direction and downward from the left end portion of the recessed portion 12PR and is connected to the front cover left stop portion 12LS. However, the implementation aspect is not limited thereto, provided that the left carrying surface 12P1 is formed in the manner of extending in the left-right direction of the vehicle. For example, the left carrying surface 12P1 may extend to the left in the vehicle left-right direction and upward from the left end portion of the recessed portion 12PR and is connected to the front cover left stop portion 12LS, or may be approximately formed to be horizontal in the vehicle left-right direction. Further, in the implementation aspect, in the cross-section obtained by cutting the front cover luggage carrying surface portion 12P by the vertical plane extending in the vehicle left-right direction, the right carrying surface 12P2 extends to the right in the vehicle left-right direction and downward from the right end portion recessed portion 12PR and is connected to the front cover right stop portion 12RS. However, the implementation aspect is not limited thereto, provided that the right carrying surface 12P2 is formed in the manner of extending in the vehicle left-right direction. For example, the right carrying surface 12P2 may extend to the right in the left-right direction of the vehicle and upward from the right end portion of the recessed portion 12PR to be connected to the front cover right stop portion 12RS, or may be approximately formed to be horizontal in the vehicle left-right direction.

Further, in the implementation aspect, the front cover luggage carrying surface portion 12P of the upper cover portion 12UU includes a recessed portion 12PR that is recessed downward. The implementation aspect is limited thereto. However, a not claimed embodiment may alternatively not include the recessed portion 12PR. In this case, the front cover luggage carrying surface portion 12P is configured in the manner of being connected to a right end portion of the left carrying surface 12P1 and a left end portion of the right carrying surface 12P2.

Further, the rope member mounting portion 20 formed by the front cover portion 12 is not limited to the implementation aspects, and the quantity, shape, formation positions, and the like may all be appropriately changed within the scope of appended claims.

For example, the left rope member mounting portion 20L, that is, the opening 12UOL1, the opening 12UOL2, and the opening 12UOL3 may not be formed on the upper surface of the upper left cover portion 12UL1 used to form the groove 12UL1G. Alternatively, instead of forming the groove 12UL1G, the upper left cover portion 12UL1 may be directly formed. Further, a quantity of openings may be not limited to the implementation aspect, and two or fewer or four or more openings may be provided. The right rope member mounting portion 20R, that is, the opening 12UOR1, the opening 12UOR2, and the opening 12UOR3 may not be formed on the upper surface of the upper right cover portion 12UR1 used to form the groove 12UR1G. Instead of forming the groove 12UR1G, the upper right cover portion 12UR1 may be directly formed. Further, the quantity of openings may be not limited to the implementation aspect, and two or fewer or four or more openings may be provided.

Further, in the upper rope member mounting portion 20U, the opening 12UOU1 and the opening 12UOU2 used to fasten the rope member may not be formed by the upper left protruding portion 12UUP1 and the upper right protruding portion 12UUP2. For example, the opening 12UOU1 and the opening 12UOU2 may be directly formed in the front cover rear stop portion 12BS. Further, the openings used to fasten the rope member may be not limited to the structure of two openings including the opening 12UOU1 and the opening 12UOU2, and only one opening may be included or three or more openings may be included.

Further, in a not claimed embodiment, the front rope member mounting portion 20F, that is, the opening 12UOF, may not be formed by using the front cover portion 12UF. For example, the opening 12UOF is formed in the front cover front stop portion 12FS. Further, the quantity of openings may be not limited to the implementation aspect, and two or more openings may be provided.

Further, the rope member mounting portion 20 may include only one or more than one of the left rope member mounting portion 20L, the right rope member mounting portion 20R, the upper rope member mounting portion 20U, and the front rope member mounting portion 20F. Further, other portions in the front cover portion 12 may be used to form the rope member mounting portion 20.

Further, the rope member mounting portion 20 formed separately from the front cover portion 12 is not limited to the implementation aspect, and the quantity, shape, formation position, and the like may all be appropriately changed within the scope of the appended claims.

For example, the mounting portion 20M1, the mounting portion 20M2, and the mounting portion 20M3 are respectively fastened on the front cover left stop portion 12LS, the front cover right stop portion 12RS, and the front cover rear stop portion 12BS, but are not limited thereto, and may be arbitrarily fastened on the front cover luggage carrying surface portion 12P, the front cover rear stop portion 12BS, the front cover left stop portion 12LS, the front cover right stop portion 12RS, and the front cover front stop portion 12FS. Further, apart from the upper cover portion 12UU of the upper front cover portion 12U, the mounting portion 20M1, the mounting portion 20M2, and the mounting portion 20M3 may be fastened on the upper left cover portion 12UL1, the lower left cover portion 12UL2, the upper right cover portion 12UR1, and the lower right cover portion 12UR2. Further, a quantity of mounting portions may be not limited to the implementation aspect, two or fewer or four or more mounting portions may be provided.

Further, the shape of the luggage support member 20S is not limited to the implementation aspect, for example, may include only the loop portion 20SR, but does not include the first connection portion 20SC1, the second connection portion 20SC2, the third connection portion 20SC3, and the fourth connection portion 20SC4. Further, the loop portion 20SR is disposed above the front cover left stop portion 12LS, the front cover rear stop portion 12BS, the front cover right stop portion 12RS, and the front cover front stop portion 12FS in the manner of surrounding the front cover luggage carrying surface portion 12P in a top view of the vehicle, but is not limited thereto, and may be, for example, only disposed above the front cover left stop portion 12LS, the front cover right stop portion 12RS, and the front cover front stop portion 12FS.

Further, in the implementation aspects, a two-wheeled motorcycle is used as an example of the leaning vehicle 1 for description. However, the vehicle 1 is a leaning vehicle that cycles in a leaning posture, may be a two-wheeled leaning vehicle or a bicycle driven by power other than an engine, or may be a three-wheeled leaning vehicle or a four-wheeled leaning vehicle.

### Reference numerals.

1: Vehicle
2: Vehicle frame
3: Head pipe
4: Steering apparatus
5: Steering shaft
6: Handlebar member
7: Fork
8: Front wheel
9: Power unit
10: Saddle portion
11: Rear wheel
12: Front cover portion
12U: Upper front cover portion
12UU: Upper cover portion
12UUF: Front edge
12UUP1: Upper left protruding portion
12UUP2: Upper right protruding portion
12UL1: Upper left cover portion
12UL1F: Front edge
12UL2: Lower left cover portion
12UR1: Upper right cover portion
12UL1G: Groove
12UR2: Lower right cover portion
12UR1G: Groove
12UF: Front cover portion
12UOL1: Opening
12UOL2: Opening
12UOL3: Opening
12UOR1: Opening
12UOR2: Opening
12UOR3: Opening
12UOU1: Opening
12UOU2: Opening
12UOF: Opening
12D: Lower front cover portion
12DL: Lower left front cover portion
12DR: Lower right front cover portion
12P: Front cover luggage carrying surface portion
12PAS1: Anti-slip member
12PAS2: Anti-slip member
12P1: Left carrying surface
12P2: Right carrying surface
12PF: Front end
12PB: Rear end
12PR: Recessed portion
12PR1: Bottom surface portion
12PR2: Left surface portion
12PR3: Right surface portion
12BS: Front cover rear stop portion
12BSR: Recessed portion
12LS: Front cover left stop portion
12RS: Front cover right stop portion
12FS: Front cover front stop portion
12O: Opening
14: Position lamp cover
15: Headlamp
16: Position lamp
17L: Left winker
17R: Right winker
18: Leg shield portion
20: Rope member mounting portion
20L: Left rope member mounting portion
20R: Right rope member mounting portion
20U: Upper rope member mounting portion
20F: Front rope member mounting portion
20M1: Mounting portion
20M2: Mounting portion
20M3: Mounting portion
20S: Luggage support member
20SR: Loop portion
20SC1: First connection portion
20SC2: Second connection portion
20SC3: Third connection portion
20SC4: Fourth connection portion
H: Horn
S: Sound collection space

## Claims

1. A leaning vehicle (1), comprising:
a head pipe (3);
a steering apparatus (4), having a steering shaft (5) rotatably inserted in the head pipe (3), a handlebar member (6) connected to an upper portion of the steering shaft (5) and operated by a rider, a fork (7) connected to a lower portion of the steering shaft (5), and a front wheel (8) supported on the fork (7);
a front cover portion (12), provided below the handlebar member (6), and above the front wheel (8) with regard to a vehicle up-down direction; and
a headlamp (15), provided on a lower portion of the front cover portion (12) with regard to the vehicle up-down direction, wherein
the front cover portion (12) overlaps the head pipe (3) in a front view of the vehicle, and overlaps the head pipe (3) in a side view of the vehicle,
a front edge of the front cover portion (12) extends downward with regard to the vehicle up-down direction and forward with regard to a vehicle front-back direction in the side view of the vehicle, wherein
the front cover portion (12) comprises:
a front cover luggage carrying surface portion (12P), formed above the headlamp (15) with regard to the vehicle up-down direction, and capable of directly carrying luggage on the surface of the front cover portion (12);
a front cover rear stop portion (12BS), formed in the manner of extending upward with regard to the vehicle up-down direction from a rear portion of the front cover luggage carrying surface portion (12P);
a front cover left stop portion (12LS) arranged on a left side of the front cover luggage carrying surface portion (12P) with regards to a vehicle left-right direction, formed in the manner of extending upward with regard to the vehicle up-down direction from a left side portion of the front cover luggage carrying surface portion (12P); and
a front cover right stop portion (12RS) arranged on a left side of the front cover luggage carrying surface portion (12P) with regards to the vehicle left-right direction, formed in the manner of extending upward with regard to the vehicle up-down direction from a right side portion of the front cover luggage carrying surface portion (12P);
the leaning vehicle (1) further comprises a rope member mounting portion (20),
the rope member mounting portion (20) is configured so that the luggage directly carried on the front cover luggage carrying surface portion (12P) is capable of being fastened on the front cover luggage carrying surface portion (12P) by a rope member mounted on the rope member mounting portion (20),
in a cross-section obtained by cutting the front cover luggage carrying surface portion (12P) and the front cover rear stop portion (12BS) by a vertical plane extending in the vehicle front-back direction, an angle of the front cover luggage carrying surface portion (12P) relative to the horizontal line is less than an angle of the front cover rear stop portion (12BS) relative to the horizontal line,
in a cross-section obtained by cutting the front cover luggage carrying surface portion (12P) and the front cover left stop portion (12LS) by a vertical plane extending in the vehicle left-right direction, an angle of the front cover left stop portion (12LS) relative to the horizontal line is greater than the angle of the front cover luggage carrying surface portion (12P) relative to the horizontal line, and
in a cross-section obtained by cutting the front cover luggage carrying surface portion (12P) and the front cover right stop portion (12RS) by the vertical plane extending in the vehicle left-right direction, an angle of the front cover right stop portion (12RS) relative to the horizontal line is greater than the angle of the front cover luggage carrying surface portion (12P) relative to the horizontal line,
the front cover portion (12) further comprises: a front cover front stop portion (12FS) formed in the manner of extending upward with regard to the vehicle up-down direction from a front portion of the front cover luggage carrying surface portion (12P), **characterized in that**
the front cover luggage carrying surface portion (12P) comprises a recessed portion (12PR) that is recessed downward with regard to the vehicle up-down direction,
the rope member mounting portion (20) is formed by a part of the front cover portion (12), and is provided below the entirety of the front cover front stop portion (12FS) with regard to the vehicle up-down direction in the front view of the vehicle, and provided in front of the recessed portion (12PR) with regard to the vehicle front-back direction in the side view of the vehicle.

2. The leaning vehicle (1) according to claim 1, **characterized in that** a further part of the rope member mounting portion (20) comprises: a left rope member mounting portion (20L) and a right rope member mounting portion (20R) with regards to the vehicle left-right direction,
the left rope member mounting portion (20L) is formed by a part of the front cover portion (12), and is arranged further leftward than the front cover left stop portion (12LS) in the front view of the vehicle with regards to the vehicle left-right direction, and
the right rope member mounting portion (20R) is formed by a part of the front cover portion (12), and is arranged further rightward than the front cover right stop portion (12RS) in the front view of the vehicle with regards to the vehicle left-right direction.

3. The leaning vehicle (1) according to claim 1, **characterized in that** a further part of the rope member mounting portion (20) is formed by a part of the front cover portion (12), and is formed in the manner of protruding upward from the front cover rear stop portion (12BS) with regard to the vehicle up-down direction.

4. The leaning vehicle (1) according to claim 1, **characterized in that** at least a part of the rope member mounting portion (20) is configured in the manner of overlapping the front cover luggage carrying surface portion (12P) in a top view of the vehicle.

5. The leaning vehicle (1) according to claim 1, **characterized in that** a distance between a front end and a rear end of the front cover front stop portion (12FS) is less than a distance between a front end and a rear end of the front cover rear stop portion (12BS) with regard to the vehicle front-back direction.

6. The leaning vehicle (1) according to claim 1, **characterized in that** the maximum height of the front cover left stop portion (12LS) in the vehicle up-down direction is less than the minimum height of the front cover rear stop portion (12BS) in the vehicle up-down direction, and
the maximum height of the front cover right stop portion (12RS) in the vehicle up-down direction is less than the minimum height of the front cover rear stop portion (12BS) in the vehicle up-down direction.

7. The leaning vehicle (1) according to claim 1, **characterized in that** the maximum height of the front cover left stop portion (12LS) in the vehicle up-down direction is less than the minimum height of the front cover rear stop portion (12BS) in the vehicle up-down direction,
the maximum height of the front cover right stop portion (12RS) in the vehicle up-down direction is less than the minimum height of the front cover rear stop portion (12BS) in the vehicle up-down direction,
the minimum height of the front cover left stop portion (12LS) in the vehicle up-down direction is greater than the maximum height of a front cover front stop portion (12FS) in the vehicle up-down direction,
the minimum height of the front cover right stop portion (12RS) in the vehicle up-down direction is greater than the maximum height of the front cover front stop portion (12FS) in the vehicle up-down direction.

8. The leaning vehicle (1) according to claim 1, **characterized in that** an anti-slip member (12PAS1, 12PAS2) is disposed on the front cover luggage carrying surface portion (12P).

9. The leaning vehicle (1) according to claim 8, **characterized in that** the anti-slip member (12PAS1, 12PAS2) is formed in a rib shape.

10. The leaning vehicle (1) according to claim 8, **characterized in that** the front cover luggage carrying surface portion (12P) comprises the recessed portion (12PR) that is recessed downward with regard to the vehicle up-down direction,
the recessed portion (12PR) comprises a bottom surface portion (12PR1) with regard to the vehicle up-down direction, a left surface portion (12PR2) formed in the manner of extending upward from a left side portion of the bottom surface portion (12PR1) in the vehicle left-right direction, and a right surface portion (12PR3) formed in the manner of extending upward from a right side portion of the bottom surface portion (12PR1) in the vehicle left-right direction, and
the anti-slip member (12PAS1, 12PAS2) is formed by the left surface portion (12PR2) and the right surface portion (12PR3) with regards to the vehicle left-right direction.

## Patentansprüche

1. Ein Neigefahrzeug (1), das umfasst:
ein Kopfrohr (3);
eine Lenkvorrichtung (4), die eine Lenkwelle (5), die drehbar in das Kopfrohr (3) eingesetzt ist, einem Lenkstangenelement (6), das mit einem oberen Abschnitt der Lenkwelle (5) verbunden ist und von einem Fahrer betätigt wird, einer Gabel (7), die mit einem unteren Abschnitt der Lenkwelle (5) verbunden ist, und einem Vorderrad (8), das auf der Gabel (7) gelagert ist, hat;
einen Frontabdeckungsabschnitt (12), der unterhalb des Lenkstangenelements (6) und oberhalb des Vorderrads (8) in Bezug auf eine Fahrzeug-Auf-Ab-Richtung vorgesehen ist; und
einen Scheinwerfer (15), der an einem unteren Abschnitt des Frontabdeckungsabschnitts (12) in Bezug auf die Fahrzeug-Auf-Ab-Richtung vorgesehen ist, wobei
der Frontabdeckungsabschnitt (12) das Kopfrohr (3) in einer Frontansicht des Fahrzeugs überlappt und das Kopfrohr (3) in einer Seitenansicht des Fahrzeugs überlappt,
eine Vorderkante des Frontabdeckungsabschnitts (12) sich in der Seitenansicht des Fahrzeugs in Bezug auf die Fahrzeug-Auf-Ab-Richtung nach unten und in Bezug auf eine Fahrzeug-Vorder-Rück-Richtung nach vorne erstreckt, wobei der Frontabdeckungsabschnitt (12) umfasst:
einen Frontabdeckungs-Gepäckträgerflächenabschnitt (12P), der oberhalb des Scheinwerfers (15) in Bezug auf die Fahrzeug-Auf-Ab-Richtung ausgebildet ist und in der Lage ist, Gepäck direkt auf der Oberfläche des Frontabdeckungsabschnitts (12) zu tragen;
einen Frontabdeckungs-Rück-Stopp-Abschnitt (12BS), der ausgebildet ist, so dass er sich nach oben in Bezug auf die Fahrzeug-Auf-Ab-Richtung von einem hinteren Abschnitt des Frontabdeckungs-Gepäckträgerflächenabschnitts (12P) erstreckt;
einen Frontabdeckungs-Links-Stopp-Abschnitt (12LS), der auf einer linken Seite des Frontabdeckungs-Gepäckträgerflächenabschnitts (12P) in Bezug auf eine Fahrzeug-Links-Rechts-Richtung angeordnet ist und ausgebildet ist, so dass er sich nach oben in Bezug auf die Fahrzeug-Auf-Ab-Richtung von einem linken Seitenabschnitt des Frontabdeckungs-Gepäckträgerflächenabschnitts (12P) erstreckt; und
einen Frontabdeckungs-Rechts-Stopp-Abschnitt (12RS), der an einer linken Seite des Frontabdeckungs-Gepäckträgerflächenabschnitts (12P) in Bezug auf die Fahrzeug-Links-Rechts-Richtung angeordnet ist und ausgebildet ist, so dass er sich nach oben in Bezug auf die Fahrzeug-Auf-Ab-Richtung von einem rechten Seitenabschnitt des Frontabdeckungs-Gepäckträgerflächenabschnitts (12P) erstreckt;
das Neigefahrzeug (1) umfasst weiterhin einen Seilelementbefestigungsabschnitt (20),
der Seilelementbefestigungsabschnitt (20) ist konfiguriert ist, so dass das Gepäck, das direkt auf dem Frontabdeckungs-Gepäckträgerflächenabschnitt (12P) getragen wird, in der Lage ist, auf dem Frontabdeckungs-Gepäckträgerflächenabschnitt (12P) durch ein Seilelement, das auf dem Seilelementbefestigungsabschnitt (20) befestigt ist, befestigt zu werden,
in einem Querschnitt, der durch Schneiden des Frontabdeckungs-Gepäckträgeroberflächenabschnitts (12P) und des Frontabdeckungs-Rück-Stopp-Abschnitts (12BS) durch eine vertikale Ebene erhalten wird, die sich in der Fahrzeug-Vorder-Rück-Richtung erstreckt, erhalten wird, ist ein Winkel des Frontabdeckungs-Gepäckträgeroberflächenabschnitts (12P) relativ zu der horizontalen Linie kleiner ist als ein Winkel des Frontabdeckungs-Rück-Stopp-Abschnitts (12BS) relativ zu der horizontalen Linie,
in einem Querschnitt, der durch Schneiden des Frontabdeckungs-Gepäckträgeroberflächenabschnitts (12P) und des Frontabdeckungs-Links-Stopp-Abschnitts (12LS) durch eine vertikale Ebene, die sich in der Fahrzeug-Links-Rechts-Richtung erstreckt, erhalten wird, ist ein Winkel des Frontabdeckungs-Links-Stopp-Abschnitts (12LS) relativ zu der horizontalen Linie größer als der Winkel des Frontabdeckungs-Gepäckträgeroberflächenabschnitts (12P) relativ zu der horizontalen Linie, und
in einem Querschnitt, der durch Schneiden des Frontabdeckungs-Gepäckträgeroberflächenabschnitts (12P) und des Frontabdeckungs-Rechts-Stopp-Abschnitts (12RS) durch die vertikale Ebene, die sich in der Fahrzeug-Links-Rechts-Richtung erstreckt, erhalten wird, ist ein Winkel des Frontabdeckungs-Rechts-Stopp-Abschnitts (12RS) relativ zu der horizontalen Linie größer als der Winkel des Frontabdeckungs-Gepäckträgerflächenabschnitts (12P) relativ zu der horizontalen Linie,
der Frontabdeckungsabschnitt (12) umfasst weiterhin: einen Frontabdeckungs-Front-Stopp-Abschnitt (12FS), der in der Weise ausgebildet ist, dass er sich nach oben in Bezug auf die Fahrzeug-Auf-Ab-Richtung von einem vorderen Abschnitt des Frontabdeckungs-Gepäckträgerflächenabschnitts (12P) erstreckt, **dadurch gekennzeichnet, dass**
der Frontabdeckungs-Gepäckträgerflächenabschnitt (12P) einen Ausnehmungsabschnitt (12PR) umfasst, der nach unten in Bezug auf die Fahrzeug-Auf-Ab-Richtung vertieft ist,
der Seilelementbefestigungsabschnitt (20) durch einen Teil des Frontabdeckungsabschnitts (12) gebildet ist, und unter der Gesamtheit des Frontabdeckungs-Front-Stopp-Abschnitts (12FS) in der Vorderansicht des Fahrzeugs in Bezug auf die Fahrzeug-Auf-Ab-Richtung vorgesehen ist und vor dem Ausnehmungsabschnitt (12PR) in Bezug auf die Fahrzeug-Vorder-Rück-Richtung in der Seitenansicht des Fahrzeugs vorgesehen ist.

2. Das Neigefahrzeug (1) gemäß Anspruch 1, **dadurch gekennzeichnet, dass** ein weiterer Teil des Seilelementbefestigungsabschnitts (20) umfasst: einen linken Seilelementbefestigungsabschnitt (20L) und einen rechten Seilelementbefestigungsabschnitt (20R) in Bezug auf die Fahrzeug-Links-Rechts-Richtung,
der linke Seilelementbefestigungsabschnitt (20L) durch einen Teil des Frontabdeckungsabschnitts (12) gebildet ist und weiter links als der Frontabdeckungs-Links-Stopp-Abschnitt (12LS) in der Vorderansicht des Fahrzeugs in Bezug auf die Fahrzeug-Links-Rechts-Richtung angeordnet ist, und
der rechte Seilelementbefestigungsabschnitt (20R) durch einen Teil des Frontabdeckungsabschnitts (12) gebildet wird und weiter rechts als der Frontabdeckungs-Rechts-Stopp-Abschnitt (12RS) in der Vorderansicht des Fahrzeugs in Bezug auf die Fahrzeug-Links-Rechts-Richtung angeordnet ist.

3. Das Neigefahrzeug (1) gemäß Anspruch 1, **dadurch gekennzeichnet, dass** ein weiterer Teil des Seilelementbefestigungsabschnitts (20) durch einen Teil des Frontabdeckungsabschnitts (12) gebildet wird und in der Weise ausgebildet ist, dass er nach oben von dem Frontabdeckungs-Rück-Stopp-Abschnitt (12BS) in Bezug auf die Fahrzeug-Auf-Ab-Richtung vorsteht.

4. Das Neigefahrzeug (1) gemäß Anspruch 1, **dadurch gekennzeichnet, dass** zumindest ein Teil des Seilelementbefestigungsabschnitts (20) konfiguriert ist, so dass er den Frontabdeckungs-Gepäckträgerflächenabschnitt (12P) in einer Draufsicht des Fahrzeugs überlappt.

5. Das Neigefahrzeug (1) gemäß Anspruch 1, **dadurch gekennzeichnet, dass** ein Abstand zwischen einem vorderen Ende und einem hinteren Ende des Frontabdeckungs-Front-Stopp-Abschnitts (12FS) kleiner ist als ein Abstand zwischen einem vorderen Ende und einem hinteren Ende des Frontabdeckungs-Rück-Stopp-Abschnitts (12BS) in Bezug auf die Fahrzeug-Vorder-Rück-Richtung.

6. Das Neigefahrzeug (1) gemäß Anspruch 1, **dadurch gekennzeichnet, dass** die maximale Höhe des Frontabdeckungs-Links-Stopp-Abschnitts (12LS) in Fahrzeug-Auf-Ab-Richtung geringer ist als die minimale Höhe des Frontabdeckungs-Rück-Stopp-Abschnitts (12BS) in Fahrzeug-Auf-Ab-Richtung, und
die maximale Höhe des Frontabdeckungs-Rechts-Stopp-Abschnitts (12RS) in Fahrzeug-Auf-Ab-Richtung geringer ist als die minimale Höhe des Frontabdeckungs-Rück-Stopp-Abschnitts (12BS) in Fahrzeug-Auf-Ab-Richtung.

7. Das Neigefahrzeug (1) gemäß Anspruch 1, **dadurch gekennzeichnet, dass** die maximale Höhe des Frontabdeckungs-Links-Stopp-Abschnitts (12LS) in Fahrzeug-Auf-Ab-Richtung geringer ist als die minimale Höhe des Frontabdeckungs-Rück-Stopp-Abschnitts (12BS) der Frontabdeckung in Fahrzeug-Auf-Ab-Richtung,
die maximale Höhe des Frontabdeckungs-Rechts-Stopp-Abschnitts (12RS) in Fahrzeug-Auf-Ab-Richtung geringer ist als die minimale Höhe des Frontabdeckungs-Rück-Stopp-Abschnitts (12BS) in Fahrzeug-Auf-Ab-Richtung,
die minimale Höhe des Frontabdeckungs-Links-Stopp-Abschnitts (12LS) in der Fahrzeug-Auf-Ab-Richtung größer ist als die maximale Höhe eines Frontabdeckungs-Front-Stopp-Abschnitts (12FS) in der Fahrzeug-Auf-Ab-Richtung,
die minimale Höhe des Frontabdeckungs-Rechts-Stopp-Abschnitts (12RS) in der Fahrzeug-Auf-Ab-Richtung größer ist als die maximale Höhe des Frontabdeckungs-Front-Stopp-Abschnitts (12FS) in der Fahrzeug-Auf-Ab-Richtung.

8. Das Neigefahrzeug (1) gemäß Anspruch 1, **dadurch gekennzeichnet, dass** ein Antirutschelement (12PAS1, 12PAS2) auf dem Frontabdeckungs-Gepäckträgerflächenabschnitt (12P) angeordnet ist.

9. Das Neigefahrzeug (1) gemäß Anspruch 8, **dadurch gekennzeichnet, dass** das Antirutschelement (12PAS1, 12PAS2) rippenförmig ausgebildet ist.

10. Das Neigefahrzeug (1) gemäß Anspruch 8, **dadurch gekennzeichnet, dass** der Frontabdeckungs-Gepäckträgerflächenabschnitt (12P) den Ausnehmungsabschnitt (12PR) umfasst, der nach unten in Bezug auf die Fahrzeug-Auf-Ab-Richtung vertieft ist,
der Ausnehmungsabschnitt (12PR) einen Bodenflächenabschnitt (12PR1) in Bezug auf die Fahrzeug-Auf-Ab-Richtung, einen linken Flächenabschnitt (12PR2), der so ausgebildet ist, dass er sich von einem linken Seitenabschnitt des Bodenflächenabschnitts (12PR1) in der Fahrzeug-Links-Rechts-Richtung nach oben erstreckt, und einen rechten Flächenabschnitt (12PR3) umfasst, der so ausgebildet ist, dass er sich von einem rechten Seitenabschnitt des Bodenflächenabschnitts (12PR1) in der Fahrzeug-Links-Rechts-Richtung nach oben erstreckt, und
das Antirutschelement (12PAS1, 12PAS2) durch den linken Flächenabschnitt (12PR2) und den rechten Flächenabschnitt (12PR3) in Bezug auf die Fahrzeug-Links-Rechts-Richtung gebildet wird.

## Revendications

1. Véhicule incliné (1), comprenant :
un tuyau de direction (3) ;
un appareil de direction (4) comportant un arbre de direction (5) inséré de manière rotative dans le tuyau de direction (3), un élément de guidon (6) relié à une partie supérieure de l'arbre de direction (5) et actionné par un cycliste, une fourche (7) reliée à une partie inférieure de l'arbre de direction (5), et une roue avant (8) supportée par la fourche (7) ;
une partie avant du capot (12), située sous l'élément de guidon (6) et au-dessus de la roue avant (8) dans le sens haut-bas et de la descente du véhicule ; et
un phare (15), placé sur une partie inférieure de la partie avant du capot (12) dans le sens haut-bas et de la descente du véhicule, dans lequel
la partie avant du capot (12) recouvre le tuyau de direction (3) dans une vue avant du véhicule, et recouvre le tuyau de direction (3) dans une vue latérale du véhicule,
un bord avant de la partie avant du capot (12) s'étend vers le bas par rapport au sens haut-bas du véhicule et vers l'avant par rapport au sens avant-arrière du véhicule dans la vue latérale du véhicule, dans lequel la partie avant du capot (12) comprend :
une partie de surface de transport de bagages du capot avant (12P), formée au-dessus du phare (15) dans le sens haut-bas et de la descente du véhicule, et capable de transporter directement des bagages sur la surface de la partie avant du capot (12) ;
une partie de butée arrière du capot avant (12BS), formée de manière à s'étendre vers le haut par rapport au sens haut-bas du véhicule à partir d'une partie arrière de la partie de surface de transport de bagages du capot avant (12P) ;
une partie de butée gauche du capot avant (12LS) disposée sur un côté gauche de la partie de surface de transport de bagages du capot avant (12P) par rapport au sens gauche-droite du véhicule, formée de manière à s'étendre vers le haut par rapport au sens haut-bas du véhicule à partir d'une partie de côté gauche de la partie de surface de transport de bagages du capot avant (12P) ; et
une partie de butée droite du capot avant (12RS) disposée sur un côté gauche de la partie de surface de transport de bagages du capot avant (12P) par rapport au sens gauche-droite du véhicule, formée de manière à s'étendre vers le haut par rapport au sens haut-bas du véhicule à partir d'une partie de côté droit de la partie de surface de transport de bagages du capot avant (12P) ;
le véhicule incliné (1) comprend en outre une partie de montage de l'élément de corde (20),
la partie de montage de l'élément de corde (20) est configurée de manière à ce que les bagages directement transportés sur la partie de surface de transport de bagages du capot avant (12P) puissent être fixés sur la partie de surface de transport de bagages du capot avant (12P) par un élément de corde monté sur la partie de montage de l'élément de corde (20),
dans une section transversale obtenue en coupant la partie de surface de transport de bagages du capot avant (12P) et la partie de butée arrière du capot avant (12BS) par un plan vertical s'étendant dans le sens avant-arrière du véhicule, un angle de la partie de surface de transport de bagages du capot avant (12P) par rapport à la ligne horizontale est inférieur à un angle de la partie de butée arrière du capot avant (12BS) par rapport à la ligne horizontale,
dans une section transversale obtenue en coupant la partie de surface de transport de bagages du capot avant (12P) et la partie de butée gauche du capot avant (12LS) par un plan vertical s'étendant dans le sens gauche-droite du véhicule, un angle de la partie de butée gauche du capot avant (12LS) par rapport à la ligne horizontale est supérieur à l'angle de la partie de surface de transport de bagages du capot avant (12P) par rapport à la ligne horizontale, et
dans une section transversale obtenue en coupant la partie de surface de transport de bagages du capot avant (12P) et la partie de butée droite du capot avant (12RS) par le plan vertical s'étendant dans le sens gauche-droite du véhicule, un angle de la partie de butée droite du capot avant (12RS) par rapport à la ligne horizontale est supérieur à l'angle de la partie de surface de transport de bagages du capot avant (12P) par rapport à la ligne horizontale,
la partie avant du capot (12) comprend en outre :
une partie de butée avant du capot avant (12FS) formée de manière à s'étendre vers le haut par rapport au sens haut-bas du véhicule à partir d'une partie avant de la partie de surface de transport de bagages du capot avant (12P), **caractérisé par le fait que**
la partie de surface de transport de bagages du capot avant (12P) comprend une partie en retrait (12PR) qui est en retrait vers le bas par rapport au sens haut-bas du véhicule,
la partie de montage de l'élément de corde (20) est formée par une partie de la partie avant du capot (12), et est située sous la totalité de la partie de butée avant du capot avant (12FS) par rapport au sens haut-bas du véhicule dans la vue avant du véhicule, et est située devant la partie en retrait (12PR) par rapport au sens avant-arrière du véhicule dans la vue latérale du véhicule.

2. Véhicule incliné (1) selon la revendication 1, **caractérisé en ce qu'**une autre partie de la partie de montage de l'élément de corde (20) comprend : une partie de montage de l'élément de corde gauche (20L) et une partie de montage de l'élément de corde droit (20R) par rapport au sens gauche-droite du véhicule,
la partie de montage de l'élément de corde gauche (20L) est formée par une partie de la partie avant du capot (12), et est disposée plus à gauche que la partie de butée gauche du capot avant (12LS) dans la vue avant du véhicule par rapport au sens gauche-droite du véhicule, et
la partie de montage de l'élément de corde droit (20R) est formée par une partie de la partie avant du capot (12) et est disposée plus à droite que la partie de butée droite du capot avant (12RS) dans la vue de face du véhicule par rapport au sens gauche-droite du véhicule.

3. Véhicule incliné (1) selon la revendication 1, **caractérisé en ce qu'**une autre partie de la partie de montage de l'élément de corde (20) est formée par une partie de la partie avant du capot (12), et est formée de manière à faire saillie vers le haut à partir de la partie de butée arrière du capot avant (12BS) par rapport au sens haut-bas du véhicule.

4. Véhicule incliné (1) selon la revendication 1, **caractérisé en ce qu'**au moins une partie de la partie de montage de l'élément de corde (20) est configurée de manière à chevaucher la partie de surface de transport de bagages du capot avant (12P) dans une vue de dessus du véhicule.

5. Véhicule incliné (1) selon la revendication 1, **caractérisé en ce qu'**une distance entre une extrémité avant et une extrémité arrière de la partie de butée avant du capot avant (12FS) est inférieure à une distance entre une extrémité avant et une extrémité arrière de la partie de butée arrière du capot avant (12BS) par rapport au sens avant-arrière du véhicule.

6. Véhicule incliné (1) selon la revendication 1, **caractérisé en ce que** la hauteur maximale de la partie de butée gauche du capot avant (12LS) dans le sens haut-bas du véhicule est inférieure à la hauteur minimale de la partie de butée arrière du capot avant (12BS) dans le sens haut-bas du véhicule, et
la hauteur maximale de la partie de butée droite du capot avant (12RS) dans le sens haut-bas du véhicule est inférieure à la hauteur minimale de la partie de butée arrière du capot avant (12BS) dans le sens haut-bas du véhicule.

7. Véhicule incliné (1) selon la revendication 1, **caractérisé en ce que** la hauteur maximale de la partie de butée gauche du capot avant (12LS) dans le sens haut-bas du véhicule est inférieure à la hauteur minimale de la partie de butée arrière du capot avant (12BS) dans le sens haut-bas du véhicule,
la hauteur maximale de la partie de butée droite du capot avant (12RS) dans le sens haut-bas du véhicule est inférieure à la hauteur minimale de la partie de butée arrière du capot avant (12BS) dans le sens haut-bas du véhicule,
la hauteur minimale de la partie de butée gauche du capot avant (12LS) dans le sens haut-bas du véhicule est supérieure à la hauteur maximale d'une partie de butée avant du capot avant (12FS) dans le sens haut-bas du véhicule,
la hauteur minimale de la partie de butée droite du capot avant (12RS) dans le sens haut-bas du véhicule est supérieure à la hauteur maximale de la partie de butée avant du capot avant (12FS) dans le sens haut-bas du véhicule.

8. Véhicule incliné (1) selon la revendication 1, **caractérisé en ce qu'**un élément antidérapant (12PAS1, 12PAS2) est disposé sur la partie de surface de transport de bagages du capot avant (12P).

9. Véhicule incliné (1) selon la revendication 8, **caractérisé en ce que** l'élément antidérapant (12PAS1, 12PAS2) a la forme d'une nervure.

10. Véhicule incliné (1) selon la revendication 8, **caractérisé en ce que** la partie de surface de transport de bagages du capot avant (12P) comprend la partie en retrait (12PR) qui est en retrait vers le bas par rapport au sens haut-bas du véhicule,
la partie en retrait (12PR) comprend une partie de surface inférieure (12PR1) par rapport au sens haut-bas du véhicule, une partie de surface gauche (12PR2) formée de manière à s'étendre vers le haut à partir d'une partie latérale gauche de la partie de surface inférieure (12PR1) dans le sens gauche-droite du véhicule, et une partie de surface droite (12PR3) formée de manière à s'étendre vers le haut à partir d'une partie latérale droite de la partie de surface inférieure (12PR1) dans le sens gauche-droite du véhicule, et
l'élément antidérapant (12PAS1, 12PAS2) est formé par la partie de surface gauche (12PR2) et la partie de surface droite (12PR3) par rapport au sens gauche-droite du véhicule.
